# EUROPEAN PATENT APPLICATION

(11) **EP 3 020 734 A1**
(43) Date of publication of application: **18.05.2016**
(21) Application number: 14823391.9
(22) Date of filing: 09.07.2014
(51) Int. Cl.: C08F 2/44, C08F 220/36, C09K 9/02, G02B 5/23, G02C 7/10

(54) **PHOTOCHROMIC CURABLE COMPOSITION**

(30) Priority: 09.07.2013 JP 2013143348
(71) Applicant: Tokuyama Corporation, Shunan-shi, Yamaguchi-ken 745-8648 (JP)
(72) Inventor: SHIMIZU, Yasutomo, Shunan-shi Yamaguchi 745-8648 (JP); MORI, Katsuhiro, Shunan-shi Yamaguchi 745-8648 (JP); MOMODA, Junji, Shunan-shi Yamaguchi 745-8648 (JP)
(74) Representative: Duckworth, Timothy John
(86) International application number: PCT/JP2014/068328
(87) International publication number: WO 2015/005391

(57) **Abstract**

A photochromic curable composition comprising (A) a polymerizable monomer component that contains a (meth)acrylic polymerizable monomer (X), and (B) a photochromic compound, wherein the (meth)acrylic polymerizable monomer (X) is constituted by 80 to 97 parts by mass of a polyfunctional monomer (Xp) having not less than two (meth) acrylic groups in a molecule thereof, and 3 to 20 parts by mass of a monofunctional monomer (Xm) having one (meth) acrylic group in a molecule thereof, the monofunctional polymerizable monomer (Xm) is constituted by an epoxy group-containing monomer (Xm¹) and an isocyanate group-containing monomer (Xm²), and the
isocyanate group-containing monomer (Xm²) and the epoxy group-containing monomer (Xm¹) are contained at a mass ratio of Xm²/Xm¹ = 3 to 40.

## Description

### Technical Field:

This invention relates to a photochromic curable composition and a photochromic laminate having a photochromic layer formed by using the above composition.

### Background Art:

Photochromic spectacles, when used out of the doors where they are irradiated with light containing ultraviolet rays like sunlight, have their lenses quickly colored to work as sunglasses and, when used inside the doors where they are not irradiated with such light, have the color of their lenses faded to work as clear and ordinary spectacles. The photochromic spectacles having such properties have, in recent years, been finding increasing demands.

As for the lenses of photochromic spectacles, plastic lenses have, particularly, been desired from the standpoint of light weight and safety. Photochromic properties are imparted to the plastic lenses, usually, by using a compound (photochromic compound) having photochromic properties relying on a method called in-mass method or coating method.

The in-mass method is a method of directly obtaining photochromic lenses by dissolving a photochromic compound in a polymerizable monomer-containing curable composition for forming lenses, and polymerizing the curable composition (see patent documents 1 to 3).

This method has an advantage of forming the lenses while at the same time imparting photochromic properties thereto accompanied, however, by the limitation on the kinds and amounts of the polymerizable monomers that are used from the standpoint of maintaining properties such as mechanical strength, refractive index and hardness of the plastic lenses resulting, therefore, in the sacrifice of photochromic properties (color density, fading rate, etc.). Besides, the color density could not be attained to a sufficient degree unless the amount of the photochromic compound was increased.

On the other hand, the coating method is a method of applying a curable composition containing a photochromic compound onto the surfaces of a plastic lens having no photochromic property and curing it to form a photochromic layer. In this case, the photochromic lens that is obtained is a laminate of the lens material and the photochromic layer.

With this method, the mechanical strength and the refractive index of the photochromic lens greatly vary depending on the lens material offering a large degree of freedom in selecting the kinds and amounts of the polymerizable monomers used for forming the photochromic layer and, therefore, an advantage in that excellent photochromic properties can be easily obtained. Besides, the thickness of the photochromic layer is very smaller than the thickness of the lens material also offering an advantage in that a large color density can be attained using the photochromic compound in a decreased amount.

As for producing the photochromic lenses as described above, the coating method has a lot of advantages as compared to the in-mass method involving, however, a problem of limitation on the thickness of the photochromic layer. That is, the larger the thickness of the photochromic layer, the more the oxygen is limited from permeating and diffusing into the photochromic layer and the more the oxygen is limited from coming in contact with the photochromic compound. This makes it possible to prevent the photochromic compound from oxidizing and deteriorating and to improve the light resistance of photochromic properties. With the coating method, however, an increase in the thickness of the photochromic layer (e.g., 100 µm or more) causes a decrease in the adhesion thereof to the lens material. Namely, the photochromic layer is liable to be peeled off, light resistance of photochromic properties cannot be improved and, therefore, further improvements have been urged.

For instance, a patent document 4 is proposing a photochromic curable composition containing 100 parts by mass of a polymerizable monomer component and 0.01 to 20 parts by mass of a photochromic compound, not less than 70 mass% of the polymerizable monomer component being a polyfunctional polymerizable monomer having 2 to 4 (meth)acrylic groups and not more than 30 mass% thereof being a monofunctional polymerizable monomer having one (meth)acrylic group. This curable composition contains the methacrylic polymerizable monomer and the acrylic monomer being so mixed together that the mole number of the methacrylic groups is 3 to 7 times as large as the mole number of the acrylic groups. The laminate having the photochromic layer formed by using the above photochromic curable composition has a large color density, a high fading rate and, besides, excellently and closely adheres to the hard coating.

Further, a patent document 5 is proposing a photochromic curable composition containing components for improving close adhesion, such as a compound having a silanol group, a compound having an isocyanate group, an amine compound, as well as a radically polymerizable monomer and a chromene compound. Namely, use of the above curable composition makes it possible to form a photochromic layer that excellently and closely adheres to the plastic lenses.

With the photochromic laminates described in the above patent documents 4 and 5, however, the photochromic layer is formed by photo-curing a thin film of the curable composition formed by the spin-coating method and has a thickness of, for example, not more than 100 µm. This is because the spin-coating method is not suited for forming thick films. Besides, the curing by polymerization based on the irradiation with light is not suited for photochromic compound-containing thick films since the films absorb much light and the films cannot be deeply cured to a sufficient degree.

The present inventors have confirmed through experiments that even if the curable compositions are blended with a thermal polymerization initiator, even if a mold for cast polymerization is prepared by using a lens material and a mold, even if a film of the curable composition is formed maintaining a thickness of not less than 100 µm on the surface of the lens material, and even if the photochromic layer is formed by the thermal polymerization, the adhesiveness is still insufficient between the photochromic layer and the lens material, and the photochromic layer easily peels off.

Further, if a photochromic layer is thickly formed by using a known photochromic composition, then a highly adhering property can be obtained. In this case, however, photochromic properties such as color density and fading rate become insufficient. After all, there cannot be obtained a photochromic laminate fulfilling the requirements of close adhesion of the thick film and photochromic properties.

### Prior Art Documents:

### Patent Documents:

Patent document 1: WO2001/005854
Patent document 2: WO2004/083268
Patent document 3: WO2009/075388
Patent document 4: WO2011/125956
Patent document 5: WO2003/011967

### Outline of the Invention:

### Problems that the Invention is to Solve:

It is, therefore, an object of the present invention to provide a photochromic curable composition capable of forming a photochromic layer excelling in photochromic properties, light resistance thereof and adhesiveness to the lens materials.

Another object of the present invention is to provide a photochromic laminate having a photochromic layer of a large thickness (specifically, not less than 100 µm), and a process for its production.

### Means for Solving the Problems:

In order to solve the above problems, the present inventors have conducted keen study. As a result, the inventors have discovered that the above problems can be solved by the use of a polyfunctional polymerizable monomer having not less than two (meth)acrylic groups in a molecule thereof and a monofunctional polymerizable monomer having one (meth) acrylic group in combination as polymerizable monomer components, and by the use of a polymerizable monomer having an epoxy group and a polymerizable monomer having an isocyanate group in amounts at a specific ratio as the monofunctional polymerizable monomers, and have thus completed the present invention.

Namely, according to the present invention, there is provided a photochromic curable composition including:
(A) a polymerizable monomer component that contains a (meth)acrylic polymerizable monomer (X), and
(B) a photochromic compound, the photochromic compound being contained in an amount of 0.01 to 20 parts by mass per 100 parts by mass of the (meth)acrylic polymerizable monomer (X), wherein:
   the (meth)acrylic polymerizable monomer (X) is constituted by 80 to 97 parts by mass of a polyfunctional monomer (Xp) having not less than two (meth) acrylic groups in a molecule thereof, and 3 to 20 parts by mass of a monofunctional monomer (Xm) having one (meth) acrylic group in a molecule thereof, the total amount of the two components being 100 parts by mass;
   the monofunctional polymerizable monomer (Xm) is constituted by an epoxy group-containing monomer (Xm¹) represented by a following formula (1) and an isocyanate group-containing monomer (Xm²) represented by a following formula (2); and
   the isocyanate group-containing monomer (Xm²) and the epoxy group-containing monomer (Xm¹) are contained at a mass ratio of Xm²/Xm¹ = 3 to 40.

Formula (1); epoxy group-containing monomer (Xm¹) 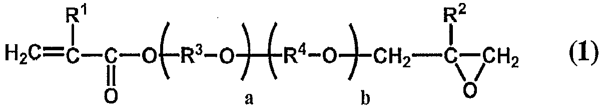 wherein,
R¹ and R² are hydrogen atoms or methyl groups,
R³ and R⁴ are alkylene groups having 1 to 4 carbon atoms or groups represented by a following formula (1a); 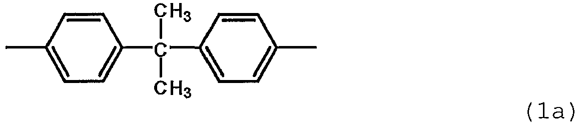 wherein,
   "a" and "b" are, respectively, numbers of 0 to 20 on average.

Formula (2); isocyanate-containing monomer (Xm²) 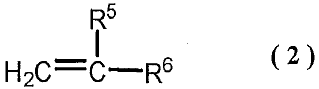 wherein,
R⁵ is a hydrogen atom or a methyl group,
R⁶ is an isocyanate-containing aliphatic group represented by the following formula (2a);

   -CO-O-R⁷-NCO (2a)

   wherein R⁷ is an alkylene group having 1 to 10 carbon atoms, or a group represented by the formula:

   -CH₂CH₂-O-CH₂CH₂-,

   or an isocyanate-containing aromatic group represented by a following formula (2b); 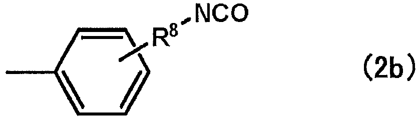 wherein R⁸ is an alkylene group having 1 to 10 carbon atoms.

In the photochromic curable composition of the present invention, it is desired that:
(1) The polyfunctional monomer (Xp) is constituted by 50 to 99 mass% of a bifunctional monomer (Xp-1) having two (meth) acrylic groups, 1 to 50 mass% of a trifunctional monomer (Xp-2) having three (meth) acrylic groups, and 0 to 49 mass% of a highly polyfunctional monomer (Xp-3) having not less than four (meth) acrylic groups (provided the total amount of Xp-1 to Xp-3 is 100 mass%);
(2) A chromene compound having an indeno[2,1-f]naphtho[2, 1-b] pyran skeleton is contained as the photochromic compound;
(3) As the polymerizable monomer component (A), a non-(meth)acrylic polymerizble monomer (Y) having a polymerizable group other than the (meth)acrylic group is contained in an amount of 1 to 20 parts by mass per 100 parts by mass of the (meth)acrylic polymerizable monomer (X);
(4) A thermal polymerization initiator is, further, contained; and
(5) The isocyanate group-containing monomer (Xm²) is preserved separately from other components.

According to the present invention, further, there is provided a photochromic laminate having a photochromic layer of a photochromic cured body formed by curing the above photochromic curable composition.

In the photochromic laminate, it is desired that the photochromic layer has a thickness of 100 to 1500 µm. Even if the photochromic layer having the above thickness is formed, no peeling is observed between the photochromic layer and the lens material despite the laminate is dipped in the boiling water of 100°C for one hour and is, thereafter, dipped in the iced water of 0°C for 10 minutes repetitively for 4 times.

According to the present invention, there is, further, provided a process for producing a photochromic laminate, including steps of:
defining a space for forming by fixing a lens material to a mold;
injecting the photochromic curable composition into the space for forming; and
forming a photochromic layer on a surface of the lens material by curing the photochromic curable composition injected into the space for forming.

In the above process for production, it is desired that the photochromic curable composition is cured by thermal polymerizing.

### Effects of the Invention:

The photochromic laminate has, on the surface of the lens material, the photochromic layer formed by using the photochromic curable composition of the present invention, and features excellent and close adhesion between the lens material and the photochromic layer. Even if the photochromic layer has a thickness of not less than 100 µm, excellent and closely adhering property is not deteriorated. For example, as demonstrated in Examples appearing later, even if the laminate having such a thick photochromic layer is dipped in the boiling water of 100°C for one hour and then in the iced water of 0°C for 10 minutes, repetitively, for at least 4 times and, specifically, 5 times, no peeling occurs between the photochromic layer and the lens substrate.

Further, in the photochromic laminate of the present invention, even if the photochromic layer is formed maintaining a thickness of not less than 100 µm, there are obtained a large color density and a high fading rate.

According to the present invention as described above, there can be obtained a photochromic laminate fulfilling such photochromic properties and light resistance as color density and fading rate, as well as close adhesion between the photochromic layer and the lens material.

### Brief Description of the Drawing:

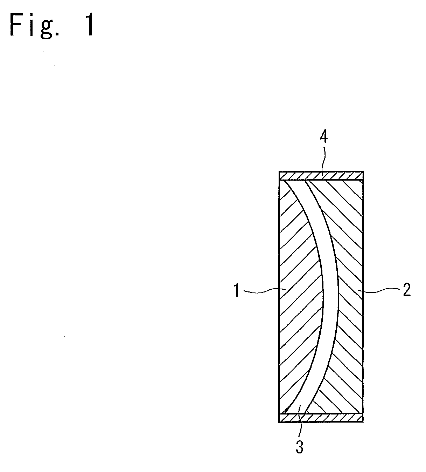

[Fig. 1]: A view illustrating a mold used for the cast polymerization for producing a photochromic laminate by using the photochromic curable composition of the present invention.

### Modes for Carrying Out the Invention:

The photochromic curable composition of the present invention contains a polymerizable monomer component (A) and a photochromic compound (B) as essential components and, further, contains additives that have been known per se., as required.

### <Polymerizable monomer components (A)>

In the invention, there is used at least a (meth) acrylic polymerizable monomer (X) as the polymerizable monomer component (A). As required, further, there is used a non-(meth)acrylic polymerizable monomer having a polymerizable group other than the (meth)acrylic group.

### (Meth)acrylic polymerizable monomers (X);

In the invention, as the (meth)acrylic polymerizable monomer (X), it is very important to use a polyfunctional monomer (Xp) having not less than two (meth) acrylic groups in a molecule thereof and a monofunctional monomer (Xm) having one (meth)acrylic group in a molecule thereof.

That is, by using the polyfunctional (meth)acrylic monomer (Xp) and the monofunctional (meth) acrylic monomer (Xm) in combination, it is made possible to form a photochromic layer that excellently and closely adheres to the lens material yet maintaining excellent photochromic properties. Even if the photochromic layer is formed maintaining a thickness of not less than 100 µm, excellent photochromic properties can be maintained.

For instance, the polyfunctional monomer (Xp) is necessary for forming the photochromic layer having a large strength. However, the polyfunctional monomer (Xp) only is not capable of producing excellent photochromic properties and, besides, is not capable of maintaining close adhesion to the lens material. This is presumably due to that in the photochromic layer having a large strength, molecules of the photochromic compound have a very low degree of freedom and the optical tautomerism becomes low. As a result, photochromic properties are deteriorated, the layer greatly contracts if it is cured and, therefore, close adhesion to the lens material is spoiled.

In the present invention, on the other hand, the monofunctional monomer (Xm) is also used in combination imparting a suitable degree of flexibility to the photochromic layer and enabling the molecules of the photochromic compound to assume an increased degree of freedom in the photochromic layer. As a result, it is considered that excellent photochromic properties are maintained, and the layer that is formed is suppressed from being contracted by the polymerization and more closely adheres to the lens material.

In the invention, if the total amount of the monofunctional monomer (Xm) and the polyfunctional monomer (Xp) is regarded to be 100 parts by mass, then the polyfunctional monomer (Xp) is used in an amount of 80 to 97 parts by mass, preferably, 85 to 96 parts by mass and, more preferably, 90 to 95 parts by mass and the monofuntional polymer (Xm) is used in an amount of 3 to 20 parts by mass, preferably, 4 to 15 parts by mass and, more preferably, 5 to 10 parts by mass. This greatly improves close adhesion between the lens material and the photochromic layer which is a cured body of the photochromic curable composition and, further, improves photochromic properties. Even if the photochromic layer is formed in a thickness of not less than 100 µm, highly close adhesion to the lens material can be maintained contributing to improving light resistance of photochromic properties.

If, for example, the polyfunctional monomer (Xp) is used in too large amounts or the monofunctional monomer (Xm) is used in too small amounts, the obtained photochromic cured body (photochromic layer) fails to exhibit excellent photochromic properties. On the other hand, if the polyfunctional monomer (Xp) is used in too small amounts or if the monofunctional polymer (Xm) is used in too large amounts, close adhesion decreases between the lens material and the photochromic layer, and photochromic properties are deteriorated, either.

### 1. Monofunctional monomers (Xm);

In the invention, as the monofunctional monomer (Xm) in the (meth) acrylic polymerizable monomer (X), there are used an epoxy group-containing monomer (Xm⁻¹) represented by the following formula (1) and an isocyanate group-containing monomer (Xm⁻²) represented by the following formula (2) in combination.

Formula (1); epoxy group-containing monomer (Xm¹) 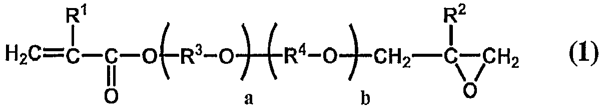 wherein, R¹ and R² are hydrogen atoms or methyl groups, and R³ and R⁴ are alkylene groups having 1 to 4 carbon atoms or a group represented by the following formula (1a); 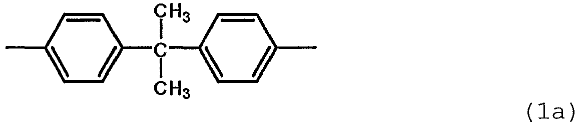 wherein, "a" and "b" are, respectively, numbers of 0 to 20 on average.

As will be understood from the above formula (1) , the epoxy group-containing monomer (Xm¹) has a (meth)acrylic group and an epoxy group in a molecule thereof. Here, it is considered that due specifically to the presence of the epoxy group, close adhesion to the lens material is improved.

In the above formula (1), as the alkylene groups represented by R³ and R⁴, there can be exemplified methylene group, ethylene group, propylene group, butylene group, trimethylene group and tetramethylene group.

Further, the groups R³ and R⁴ may have a substituent as represented by a hydroxyl group.

The compound represented by the above formula (1) is often obtained in the form of a mixture of compounds having dissimilar molecular weights. Therefore, a representing the number of R³ and b representing the number of R⁴ are average values.

Described below are concrete examples of the monofunctional monomer (Xm) represented by the above formula (1), which can be used in one kind or in a mixture of two or more kinds.
Glycidyl methacrylate,
Glycidyloxymethyl methacrylate,
2-Glycidyloxyethyl methacrylate,
3-Glycidyloxypropyl methacrylate,
5 4-Glycidyloxybutyl methacrylate,
Polyethylene glycol glycidyl methacrylate having an average molecular weight of 406,
Polyethylene glycol glycidyl methacrylate having an average molecular weight of 538,
Polyethylene glycol glycidyl methacrylate having an average molecular weight of 1022,
Polypropylene glycol glycidyl methacrylate having an average molecular weight of 664,
10 Bisphenol A-monoglycidylether methacrylate,
3-(Glycidyl-2-oxyethoxy)-2-hyroxypropyl methacrylate,
Glycidyl acrylate,
Glycidyloxymethyl acrylate,
2-Glycidyloxyethyl acrylate,
15 3-Glycidyloxypropyl acrylate,
4-Glycidyloxybutyl acrylate,
Polyethylene glycol glycidyl acrylate having an average molecular weight of 406,
Polyethylene glycol glycidyl acrylate having an average molecular weight of 538,
Polyethylene glycol glycidyl acrylate having an average molecular weight of 1022,
20 3-(Glycidyloxy-1-isopropyloxy)-2-hydroxypropyl acrylate,
3-(Glycidyloxy-2-hydroxypropyloxy)-2-hydroxypropyl acrylate.

In the present invention, among the monofunctional monomers (Xm¹) exemplified above, it is desired to use glycidyl methacrylate, glycidyloxymethyl methacrylate, 2-glycidyloxyethyl methacrylate, 3-glycidyloxypropyl methacrylate and glycidyl acrylate, and, particularly preferably, to use glycidyl methacrylate.

Formula (2); isocyanate-containing monomer (Xm²) 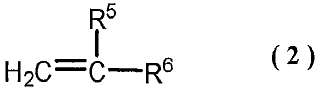
wherein, R⁵ is a hydrogen atom or a methyl group,
R⁶ is an isocyanate-containing aliphatic group represented by the following formula (2a);

   -CO-O-R⁷-NCO (2a)

   wherein R⁷ is an alkylene group having 1 to 10 carbon atoms, or a group represented by -CH₂CH₂-O-CH₂CH₂-, or an isocyanate-containing aromatic group represented by the following formula (2b); 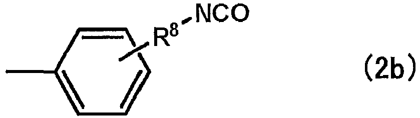 wherein, R⁸ is an alkylene group having 1 to 10 carbon atoms.

As will be understood from the above formula (2), the isocyanate monomer (Xm²) used in combination with the epoxy group-containing monomer (Xm¹) has a (meth)acrylic group and an isocyanate group in a molecule thereof. Upon also using the above monomer (Xm²) in combination, it is allowed to suitably suppress the film that is formed from being contracted by curing, to maintain excellent photochromic properties and, at the same time, to greatly improve close adhesion between the photochromic layer and the lens material. For instance, even if the photochromic layer is formed in a thickness of as large as 100 µm or more, the highly and closely adhering property can be attained. Presumably, the isocyanate group in the monomer (Xm²) reacts with a group having active hydrogen such as hydroxyl group present on the surface of the lens material so as to be firmly bonded to the lens material. Besides, the (meth) acrylic group in the monomer (Xm²) copolymerizes with the (meth)acrylic group in the polyfunctional monomer (Xm¹) so as to relax the contraction by polymerization.

In the above formula (2), it is desired that the alkylene group R⁷ in the formula (2a) and the alkylene group R⁸ in the formula (2b) have carbon atoms in a number of 1 to 10. Concrete examples of the alkylene group include methylene group, ethylene group, propylene group, trimethylene group, butylene group, tetramethylene group and hexamethylene group.

These alkylene groups, too, may have a suitable substituent such as hydroxyl group but, usually, are better not to have the substituent.

In the invention, the isocyanate monomer (Xm²) represented by the above formula (2) is the one having the isocyanate-containing aliphatic group of the formula (2a), such as 2-isocyanatoethyl (meth)acrylate or 2- (2-isocyanatoethoxy) ethyl methacrylate, or is the one having the isocyanate-containing aromatic group of the formula (2b), such as 4-(2-isocyanatoisopropyl) styrene.

The isocyanate monomers (Xm²) can be used in one kind or in a mixture of two or more kinds.

In the invention, further, the above-mentioned isocyanate group-containing monomer (Xm²) and the epoxy group-containing monomer (Xm¹) are used at a mass ratio of Xm²/Xm¹ = 3 to 40, preferably, 4 to 30 and, most preferably, 5 to 20.

Namely, if the isocyanate group-containing monomer (Xm²) is used in too small amounts (if the epoxy group-containing monomer (Xm¹) is used in too large amounts), desired closely adhering property is not obtained.

Further, if the isocyanate group-containingmonomer (Xm²) is used in too large amounts (if the epoxy group-containing monomer (Xm¹) is used in too small amounts), closely adhering property can be attained but photochromic properties are deteriorated and the light resistance of photochromic properties becomes unsatisfactory, either. Presumably, the isocyanate group works to limit the degree of freedom for the molecules of the photochromic compound.

### Other monofunctional monomers (Xm³);

In the invention, as the monofunctional monomer (Xm) having a (meth) acrylic group in a molecule thereof, there can be suitably used a monofunctional monomer (Xm³) having a (meth) acrylic group other than the isocyanate group-containing monomer (Xm²) and the epoxy group-containing monomer (Xm¹) provided the mass ratio (Xm²/Xm¹) of the isocyanate group-containing monomer (Xm²) and the epoxy group-containing monomer (Xm¹) lies within the above-mentioned range.

As the other monofunctional acrylic monomers, there can be used those represented by the following formula (3);

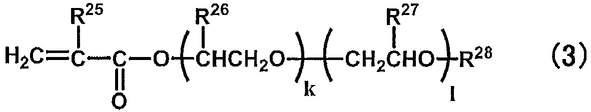

In the above formula (3), R²⁵, R²⁶ and R²⁷ are, respectively, hydrogen atoms or methyl groups.

Further, R²⁸ is a hydrogen atom, an alkyl group having 1 to 20 carbon atoms, a cycloalkyl group having 6 to 20 carbon atoms, a phenyl group or a naphthyl group. Here, preferably, the alkyl group and the cycloalkyl group do not have the substituent. The phenyl group and the naphthyl group, however, may or may not have the substituent. The preferred substituent that is possessed by the phenyl group or the naphthyl group is an alkyl group having 1 to 20 carbon atoms.

In the above formula (3), it is desired that k is a number of 0 to 25 on average, 1 is a number of 0 to 25 on average, and k + 1 is in a range of 0 to 25 and, specifically, 0 to 15.

The compounds described below are concrete examples of the other monofunctional (meth)acrylic monomer (Xm³) represented by the above formula (3), which can be used in one kind or in a mixture of two or more kinds.
Methoxydiethylene glycol methacrylate,
Methoxytetraethylene glycol methacrylate,
Methoxypolyethylene glycol methacrylate (average recurring number (k+1) of the ethyleneoxy group of 9,
and the average molecular weight of 468),
Methoxypolyethylene glycol methacrylate (average recurring number (k+1) of the ethyleneoxy group of 23,
and the average molecular weight of 1068),
5 Isostearyl methacrylate,
Isobornyl methacrylate,
Phenoxyethylene glycol methacrylate,
Phenoxyethyl acrylate,
Phenoxydiethylene glycol acrylate,
10 Phenoxypolyethylene glycol acrylate (average recurring number (k+1) of the ethyleneoxy group of 6,
and the average molecular weight of 412),
Naphthoxyethylene glycol acrylate,
Isostearyl acrylate, and
Isobornyl acrylate.

In the invention, the other monofunctional monomer (Xm³) is used suitably in an amount of not more than 51 mass% and, specifically, not more than 40 mass% per 100 mass% of the total amount of the monofunctional (meth)acrylic monomers (Xm) provided the above-mentioned mass ratio (Xm²/Xm¹) lies in the above-mentioned range. Further, if the other monofunctional (meth)acrylic monomer is used, it is desired that the amount of the epoxy group-containing monofunctional monomer (Xm¹) is in a range of 2 to 25 mass% while the amount of the isocyanate group-containing monomer (Xm²) is in a range of 47 to 98 mass% from the standpoint of close adhesion between the photochromic layer and the lens material, and photochromic properties.

### 2. Polyfunctional monomers (Xp);

In the invention, the polyfunctional (meth)acrylic monomer (Xp) in the (meth) acrylic polymerizable monomer (X) is a monomer having not less than two (meth)acrylic groups in a molecule thereof and has been known per se. Specifically, there can be used the one that has been used for forming plastic lenses. Further, the polyfunctional monomer (Xp) can be a compound having both the methacrylic acid and the acrylic acid in a molecule thereof.

If the polyfunctional monomer (Xp) is a compound having not less than two (meth) acrylic groups in a molecule thereof, it is usually desired that the bifunctional (meth)acrylic monomer (Xp-1) having two (meth)acrylic groups is used in combination with the trifunctional (meth)acrylic monomer (Xp-2) having three (meth)acrylic groups and, further as required, in combination with the polyfunctional (meth) acrylic monomer (Xp-3) having not less than four (meth) acrylic groups.
(Xp-1) Bifunctional monomers;
   As the bifunctional monomer (Xp-1), there can be exemplified a crosslinked alkyleneoxydi(meth)acrylate (Xp-1a), a non-crosslinked alkyleneoxydi(meth)acrylate (Xp-1b), a bifunctional urethane(meth)acrylate (Xp-1c) and a bifunctional polycarbonate (meth)acrylate (Xp-1d).
(Xp-1a) Crosslinked alkyleneoxydi(meth)acrylates.

The crosslinked alkyleneoxydi(meth)acrylate is represented by the following formula (4).

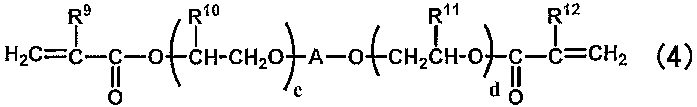

In the above formula (4), R⁹ to R¹² are, respectively, hydrogen atoms or methyl groups.

Further, "c" and "d" are, respectively, numbers of 0 to 20 on average and, preferably, "c+d" is in a range of 0 to 20 and, specifically, 2 to 15.

Moreover, in the formula (4), A is a divalent organic group having 2 to 20 carbon atoms.

As will be understood from the above formula (4), the crosslinked alkyleneoxydi(meth)acrylate has a structure in which two alkylene oxide chains in a molecule are crosslinked via a divalent organic group A.

Concrete examples of the organic group A includes alkylene groups such as ethylene group, propylene group, butylene group and nonylene group; halogen atoms such as chlorine atom, fluorine atom and bromine atom; phenylene groups having an alkyl group with 1 to 4 carbon atoms as a substituent; unsubstituted phenylene group; and groups represented by the following formulas: 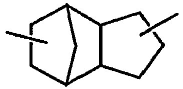 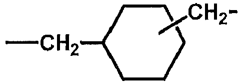 and

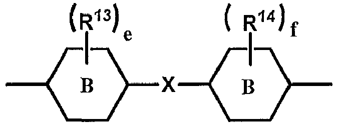

In the above formulas, R¹³ and R¹⁴ are, respectively, alkyl groups having 1 to 4 carbon atoms, chlorine atoms or bromine atoms, and e and f are, respectively, integers of 0 to 4. In the above formula, the ring B represented by the following formula: 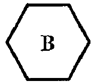 is a benzene ring or a cyclohexane ring.

If the ring B is a benzene ring, then the divalent group X is -O-, -S-, -S(O)₂-, -CO-, -CH₂-, -CH=CH-, -C(CH₃)₂-, -C(CH₃) (C₆H₅)-, or a group represented by the following formula: 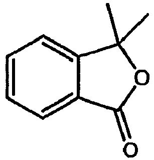 and if the ring B is a cyclohexane ring, then the divalent group X is -O-, -S-, -CH₂-, or -CH=CH-.

The crosslinked alkyleneoxydi(meth)acrylate (Xp-1a) represented by the above formula (4) is effective in assuring the hardness of the obtained photochromic cured body (photochromic layer) and, further, in improving potochromic properties and, specifically, the color density.

The following compounds are concrete examples of the crosslinked alkyleneoxydi (meth) acrylate, and can be used in one kind or in a combination of two or more kinds.
1,4-Butanediol dimethacrylate,
1,6-Hexanediol dimethacrylate,
1,9-Nonanediol dimethacrylate,
1,10-Decanediol dimethacrylate,
5 Neopentyl glycol dimethacrylate,
2,2-Bis[4-methacryloxy(polyethoxy)phenyl]propane (c+d is 2.3),
2,2-Bis[4-methacryloxy(polyethoxy)phenyl]propane (c+d is 2.6),
2,2-Bis[4-methacryloxy(polyethoxy)phenyl]propane (c+d is 4),
2,2-Bis[4-methacryloxy(polyethoxy)phenyl]propane (c+d is 10),
10 2,2-Bis[4-methacryloxy(polyethoxy)phenyl]propane (c+d is 20),
Tricyclodecanedimethanol dimethacrylate, 1,6-Hexanediol diacrylate,
1.9-Nonanediol diacrylate,
1,10-Decanediol diacrylate,
15 Neopentyl glycol diacrylate,
Tricyclodecanedimethanol diacrylate,
Dioxane glycol diacrylate,
Ethoxylated cyclohexanedimethanol diacrylate (c+d is 4),
2,2-Bis[4-acryloxy(polyethoxy)phenyl] propane (c+d is 3),
20 2,2-Bis[4-acryloxy(polyethoxy)phenyl] propane (c+d is 4),
2,2-Bis[4-acryloxy(polyethoxy)phenyl] propane (c+d is 10), and
2,2-Bis[4-acryloxy(polyethoxy)phenyl] propane (c+d is 20),

In the invention, among the above-mentioned compounds, it is specifically desired to use the compounds having a skeleton of which A in the formula (4) is represented by the following formula: 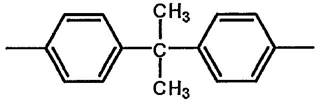 such as the compounds described below from the standpoint of obtaining specifically large color densities.
2,2-Bis[4-acryloxy(polyethoxy)phenyl]propane (c+d is 4),
2,2-Bis[4-acryloxy(polyethoxy)phenyl]propane (c+d is 10),
2,2-Bis[4-methacryloxy(polyethoxy)phenyl]propane (c+d is 10), and
2,2-Bis[4-methacryloxy(polyethoxy)phenyl]propane (c+d is 20).

### (Xp-1b) Non-crosslinked alkyleneoxydi(meth)acrylates

The non-crosslinked alkyleneoxydi(meth)acrylate is represented by the following formula (5).

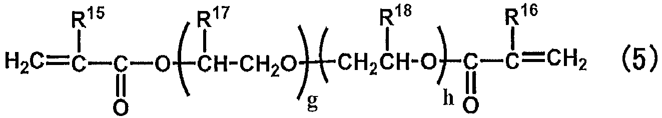

In the above formula (5), R¹⁵ to R¹⁸ are, respectively, hydrogen atoms or methyl groups.

Further, "g" and "h" are, respectively, numbers of 0 to 25 on average and, preferably, "g+h" is in a range of 1 to 25 and, specifically, 3 to 15.

The above di(meth)acrylate is different from the above-mentioned crosslinked compound in regard to that no another divalent group (crosslinking group) is interposed between the alkylene chains in the molecule.

The non-crosslinked alkyleneoxydi(meth)acrylate represented by the above formula (5) is effective in improving photochromic properties and, specifically, the color density of the obtained photochromic cured body (photochromic layer). The following compounds are concrete examples thereof and can be used in one kind or in a combination of two or more kinds.
Ethylene glycol dimethacrylate,
Diethylene glycol dimethacrylate,
Triethylene glycol dimethacrylate,
Tetraethylene glycol dimethacrylate,
5 Polyethylene glycol dimethacrylate
(average recurring number (g+h) of ethyleneoxy group of 9, and average molecular weight of 536),
Polyethylene glycol dimethacrylate
(average recurring number (g+h) of ethyleneoxy group of 14, and average molecular weight of 736),
Polyethylene glycol dimethacrylate
(average recurring number (g+h) of ethyleneoxy group of 23, and average molecular weight of 1136),
Tripropylene glycol dimethacrylate,
Tetrapropylene glycol dimethacrylate,
10 Polypropylene glycol dimethacrylate
(average recurring number (g+h) of propyleneoxy group of 9, and average molecular weight of 20662),
Ethylene glycol diacrylate,
Diethylene glycol diacrylate,
Triethylene glycol diacrylate,
Tetraethylene glycol diacrylate,
15 Polyethylene glycol diacrylate
(average recurring number (g+h) of ethyleneoxy group of 9, and average molecular weight of 508),
Polyethylene glycol diacrylate
(average recurring number (g+h) of ethyleneoxy group of 14, and average molecular weight of 708),
Dipropylene glycol diacrylate,
Tripropylene glycol diacrylate,
Tetrapropylene glycol diacrylate,
20 Polypropylene glycol diacrylate
(average recurring number (g+h) of propyleneoxy group of 7, and average molecular weight of 536),
Polypropylene glycol diacrylate
(average recurring number (g+h) of propyleneoxy group of 12, and average molecular weight of 808).

### (Xp-1c) Bifunctional urethane (meth)acrylates

The bifunctional urethane (meth)acrylate is an urethane (meth)acrylate having two (meth)acrylic groups in a molecule, and is effective in assuring the strength of the obtained photochromic cured body (photochromic layer).

The bifunctional urethane (meth)acrylate includes the one having an acrylic group and a methacrylic group in a molecule thereof and the one having two acrylic groups or two methacrylic groups in a molecule thereof. In the invention, however, it is desired to use the one that has two acrylic groups or two methacrylic groups in a molecule thereof. Further, the one that has no aromatic ring in the molecule is desirable from such a standpoint that the photochromic cured body has excellent light resistance without developing discoloration such as developing yellow color.

Concretely, the following bifunctional urethane (meth)acrylates can be favorably used.

An urethane prepolymer obtained by reacting a diisocyanate compound with a diol compound is, further, reacted with a 2-hydroxyethyl (meth) acrylate that may have an alkylene oxide chain to obtain a reaction mixture, or a diisocyanate is directly reacted with the 2-hydroxyethyl (meth)acrylate that may have the alkylene oxide chain to obtain a reaction mixture that has an average molecular weight of not less than 400 but less than 20,000; or the diisocyanate compound is directly reacted with the 2-hydroxyethyl (meth)acrylate that may have the alkylene oxide chain to obtain a reaction mixture that has an average molecular weight of not less than 400 but less than 20,000.

As the diisocyanate compound, there can be exemplified the following compounds.
Hexamethylene diisocyanate,
Isophorone diisocyanate,
Lizine diisocyanate,
2,2,4-Trimethylhexamethylene diisocyanate,
5 Dimeric diisocyanate,
Isopropylydenebis-4-cyclohexyl isocyanate,
Dicyclohexylmethane diisocyanate,
Norbornene diisocyanate, and
Methylcyclohexane diisocyanate.

As the diol compound to be reacted with the above diisocyanate compound, there can be exemplified the following compounds.
Polyalkylene glycol having a recurring unit of ethylene oxide with 2 to 4 carbon atoms, propylene oxide and hexamethylene oxide,
Polyesterdiol such as polycaprolactonediol,
Polybutadienediol,
5 Ethylene glycol,
Propylene glycol,
1,3-Propanediol,
1,4-Butanediol,
1,5-Pentanediol,
10 1,6-Hexanediol,
1,8-Octanediol,
1,9-Nonanediol,
Neopentyl glycol,
Diethylene glycol,
15 Dipropylene glycol,
1,4-Cyclohexanediol, and
1,4-Cyclohexanedimethanol.

The above bifunctional urethane (meth)acrylates have been placed in the market in, for example, the following trade names.

U-2PPA (molecular weight, 482), UX22P (molecular weight, 1,100), U-122P (molecular weight, 1,100), U-108A, U-200PA, UA-511, U-412A, UA-4100, UA-4200, UA-4400, UA-2235PE, UX60TM, UA-6100, UA-6200, U-108, UA-4000, UA-512, manufactured by Shin-Nakamura Kagaku Kogyo Co.;
EB4858 (molecular weight, 454) manufactured by Daicel UCB Co.; and
UX-2201, UX-3204, UX-4101, 6101, 7101 and 8101 manufactured by Nihon Kayaku Co.

### (Xp-1d) Bifunctional polycarbonate (meth)acrylates.

The bifunctional monomer is a polycarbonate (meth)acrylate having two (meth)acrylic groups, and is represented by the following formula (6).

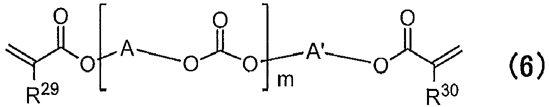

In the above formula (6), "m" is a number of 1 to 20 on average, A and A' are, respectively, straight-chain or branched-chain alkylene groups and, if there are a plurality of As in a molecule, the plurality of As may be the same or different, and R²⁹ and R³⁰ are hydrogen atoms or methyl groups.

The polycarbonate (meth)acrylate is used for adjusting the formability of the photochromic curable composition, photochromic properties (color density and fading rate) of the photochromic layer and the surface hardness thereof.

In the above formula (6), as the alkylene groups A and A', though not limited thereto only, there can be exemplified trimethylene group, tetramethylene group, pentamethylene group, hexamethylene group, octamethylene group, nonamethylene group, dodecamethylene group, pentadecamethlene group, 1-methyltriethylene group, 1-ethyltriethylene group and 1-isopropyltriethylene group.

In the invention, from the standpoint of adjusting the above various properties, in particular, it is desired that the alkylene groups A and A' have carbon atoms in a number in a range of 2 to 15, preferably, 3 to 9 and, more preferably, 4 to 7.

From the standpoint of photochromic properties, further, it is desired that the above R²⁹ and R³⁰ are hydrogen atoms.

Further, the polycarbonate (meth)acrylate having the above structure is, usually, obtained in the form of a mixture of compounds having different number m of recurring carbonate units. In the mixture, the average value of m is in a range of 1 to 20 as described above but is, preferably, in a range of 2 to 8 and, more preferably, 2 to 5. Further, under a condition that the average value of m is within the above range, it is desired from the standpoint of adjusting the properties that a maximum value of m is not more than 30, specifically, not more than 15 and, most desirably, not more than 10.

In the above mixture, further, the groups As in the recurring unit may be the same as, or different from, each other. From the standpoint of compatibility with other monomers, however, it is desired that the mixture contains dissimilar groups As.

For instance, if the total amount of the groups As in the mixture is presumed to be 100 mol%, it is desired that the alkylene group with 3 to 5 carbon atoms is contained in an amount of 10 to 90 mol%, the alkylene group with 6 to 9 carbon atoms is contained in an amount of 10 to 90 mol% and, most desirably, the alkylene group with 4 to 5 carbon atoms is contained in an amount of 10 to 90 mol% and the alkylene group with 6 to 7 carbon atoms is contained in an amount of 10 to 90 mol%. With dissimilar As being mixed together, it is allowed to improve the compatibility with other monomers, to obtain a photochromic curable composition that can be favorably dispersed and, particularly to effectively prevent the photochromic layer from becoming cloudy.

In the present invention, as the bifunctional (meth)acrylic monomer (Xp-1), there can be used the above-mentioned compounds in one kind or in a combination of two or more kinds.

For instance, from the standpoint of improving photochromic properties and, specifically, fading rate, if the total amount of the bifunctional (meth) acrylic monomer (Xp) is presumed to be 100 mass%, it is desired that the crosslinked alkyleneoxydi(meth)acrylate (Xp-1a) is used in an amount of 0 to 90 mass% and, specifically, 10 to 75 mass%, the non-crosslinked alkyleneoxydi(meth)acrylate (Xp-1b) is used in an amount of 10 to 100 mass% and, specifically, 25 to 90 mass%, the bifunctional urethane (meth) acrylate (Xp-1c) is used in an amount of 0 to 30 mass% and, specifically, 0 to 20 mass%, and the polycarbonate (meth)acrylate (Xp-1d) is used in an amount of 0 to 30 mass% and, specifically, 0 to 20 mass%.

### (Xp-2) Trifunctional monomers;

As the trifunctional (meth) acrylic monomer, there can be used any compound without particular limitation if it has three (meth) acrylic groups in a molecule thereof. Usually, however, there can be used the following trifunctional alkyleneoxy(meth)acrylate (Xp-2a) and trifunctional urethane (meth)acrylate (Xp-2b).

### (Xp-2a) Trifunctional alkyleneoxy(meth)acrylates

The trifunctional alkyleneoxy(meth)acrylate is represented by the following formula (7).

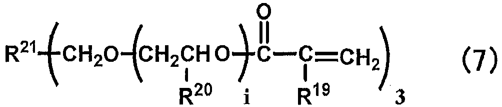

In the above formula (7), R¹⁹ and R²⁰ are, respectively, hydrogen atoms or methyl groups, R²¹ is a trivalent non-urethane organic group having 1 to 10 carbon atoms, and "I" is a number of 0 to 3 on average.

The trifunctional alkyleneoxy(meth)acrylate is effective in assuring the hardness of the obtained photochromic cured body (photochromic layer) and in improving photochromic properties and, specifically, color density and fading rate.

The following compounds are concrete examples of the trifuctional alkyleneoxy(meth)acrylate.
Trimethylolpropane trimethacrylate,
Trimethylolpropane triacrylate,
Tetramethylolmethane trimethacrylate,
Tetramethylolmethane triacrylate (pentaerythritol triacrylate),
5 Trimethylolpropanetriethylene glycol trimethacrylate, and
Trimethylolpropanetriethylene glycol triacrylate.

Among the above compounds, the trimethylolpropane trimethacrylate is particularly preferred.

### (Xp-2b) Trifunctional urethane (meth)acrylates.

The trifunctional urethane (meth)acrylate, too, has three (meth)acrylic groups in a molecule thereof and is effective in assuring the strength of the obtained photochromic cured body.

The trifunctional urethane (meth) acrylate has been known per se. and includes the one that has both the acrylic group and the methacrylic group in a molecule thereof and the one that has either the acrylic group or the methacrylic group in a molecule thereof. The present invention can use either trifunctional urethane (meth)acrylate. Specifically desirably, however, the invention uses the one that has either the acrylic group or the methacrylic group.

From the standpoint of light resistance, further, it is desired to use the one that has no aromatic ring in the molecular structure thereof. Use of the trifunctional urethane (meth)acrylate of such a structure effectively prevents the photochromic layer (photochromic cured body) from developing yellow color.

As the trifunctional urethane (meth) acrylate, there can be concretely exemplified a reaction mixture obtained by reacting a diisocyanate with polyols of low molecular weights to obtain an urethane prepolymer which is, further, reacted with a 2-hydroxyethyl (meth) acrylate that may have an alkylene oxide chain, the reaction mixture having a molecular weight of not less than 400 but less than 20,000.

The following compounds are representative examples of the diisocyanate and the low-molecular polyol. Diisocyanates;
Hexamethylene diisocyanate,
Isophorone diisocyanate,
Lizine isocyanate,
2,2,4-Trimethylhexamethylene diisocyanate,
5 Dimeric diisocyanate,
Isopropylidenebis-4-cyclohexyl isocyanate,
Dicyclohexylmethane diisocyanate,
Norbornene diisocyanate, and
Methylcyclohexane diisocyanate.

### Low-molecular polyols;

Glycerin, and
Trimehylolpropane.

The above trifunctional urethane (meth) acrylate has been placed by Sartomer Co. in the market in the trade name of, for example, CN929 (number of functional groups is 3).

In the invention, the above trifunctional alkyleneoxy (meth)acrylate (Xp-2a) and the trifunctional urethane (meth)acrylate (Xp-2b) can be, respectively, used alone, or both of them can be used in combination. From the standpoint of further improving the photochromic properties and, particularly, fading rate, however, it is desired that the (Xp-2a) is used in an amount of 20 to 100 mass% and, specifically, 50 to 100 mass% while (Xp-2b) is used in an amount of 0 to 80 mass% and, specifically, 0 to 50 mass% provided the total amount of the trifunctional monomers (Xp-2) is 100 mass%.

### (Xp-3) Highly polyfunctional monomers;

The highly functional monomer (Xp-3) has not less than 4 (meth)acrylic groups in a molecule thereof, and its representative examples are a highly functional alkylneoxy(meth)acrylate (Xp-3a) and a highly functional (meth)acrylate silsesquioxane (Xp-3c).

### (Xp-3a) Highly polyfunctional alkyleneoxy(meth)acrylates.

The highly polyfunctional alkyleneoxy(meth)acrylate is represented by the following formula (8).

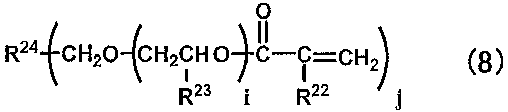

In the above formula (8), R²² and R²³ are, respectively, hydrogen atoms or methyl groups, R²⁴ is a non-urethane organic group (i.e., without having an urethane bond) having 1 to 10 carbon atoms and a valence of 4 or more, "i" is a number of 0 to 3 on average, and "j" is an integer of not less than 4.

The highly functional alkyleneoxy(meth)acrylate has not less than 4 (meth)acrylate groups in a molecule thereof and, like the above-mentioned trifunctional urethane (meth)acrylate (Xp-2a), is effective in assuring the hardness of the obtained photochromic cured body (photochromic layer) and, further, in improving photochromic properties and, specifically, color density and fading rate.

The following compounds are concrete examples of the highly functional alkyleneoxy(meth)acrylate.
Tetramethylolmethane tetramethacrylate,
Tetramethylolmethane tetraacrylate,
Ditrimethylolpropane tetramethacryate,
Ditrimethylolpropane tetraacrylate,
5 Tetrafunctional polyester oligomer having a molecular weight of 2, 500 to 3, 500 (EB80, etc. manufactured by Daicel UCB Co.),
Tetrafunctional polyester oligomer having a molecular weight of 6, 000 to 8, 000 (EB450, etc. manufactured by Daicel UCB Co.),
Hexafunctional polyester oligomer having a molecular weight of 45,000 to 55,000 (EB1830, etc. manufactured by Daicel UCB Co.), and
Tetrafunctional polyester oligomer having a molecula weight of 10,000 (GX8488B, etc. manufactured by Daiichi Kogyo Seiyaku Co.).

Among the above, the ditrimethylolpropane tetramethacrylate is particularly desired as the highly functional monomer (Xp-3).

### (Xp-3b) Highly functional urethane (meth)acrylates

The highly functional urethane (meth)acrylate has not less than four (meth) acrylic groups in a molecule thereof, and is effective in assuring the strength of the obtained photochromic cured body (photochromic layer). Like the above trifunctional urethane (meth)acrylate (Xp-2b), there are the one that has both the acrylic group and the methacrylic group in a molecule thereof and the one that has either the acrylic group or the methacrylic group in a molecule thereof. The invention can use either of the highly functional urethane (meth)acrylate but, particularly desirably, use the one that has either the acrylic group or the methacrylic group.

From the standpoint of light resistance, further, it is desired that the compound has no aromatic ring in the molecular structure thereof. Use of the highly functional urethane (meth)acrylate having such a molecular structure works to effectively prevent the photochromic layer (photochromic cured body) from developing yellow color.

As the highly functional urethane (meth)acrylate, there can be concretely exemplified a reaction mixture obtained by reacting a diisocyanate described below with polyols of low molecular weights to obtain an urethane prepolymer which is, further, reacted with a 2-hydroxyethyl (meth) acrylate that may have an alkylene oxide chain, the reaction mixture having a molecular weight of not less than 400 but less than 20,000.
Diisocyanates;
   Hexamethylene diisocyanate,
   Isophorone diisocyanate,
   Lizine isocyanate,
   2,2,4-Trimethylhexamethylene diisocyanate,
   5 Dimeric diisocyanate,
   Isopropylidenebis-4-cyclohexyl isocyanate,
   Dicyclohexylmethane diisocyanate,
   Norbornene diisocyanate, and
   Methylcyclohexane diisocyanate.
Low-molecular polyols;
   Glycerin,
   Trimethylolpropane, and
   Pentaerythritol.

The above highly functional urethane (meth)acrylates have been placed by Shin-Nakamura Kagaku Kogyo Co. in the market in the trade names of U-4HA (molecular weight 596, functional group number 4), U-6HA (molecular weight 1019, functional group number 6), U-6LPA (molecular weight 818, functional group number 6), and U-15HA (molecular weight 2,300, functional group number 15).

### (Xp-3c) Polyfunctional (meth)acrylatesilsesquioxanes

The polyfunctional (meth)acrylatesilsesquioxane, too, has not less than four (meth)acrylic groups in a molecule thereof, and has been known to assume various structures such as cage-like, ladder-like and random structures. Typically, it is represented by the following formula (9).

(R³¹- SiO_{3/2})ₙ (9)

In the above formula (9), "n" represents the degree of polymerization and is an integer of 6 to 100, and among not less than six Rs³¹ present in a molecule, at least four Rs³¹ are (meth)acrylic groups or organic groups having (meth)acrylic groups, and other Rs³¹ are radically polymerizable groups other than the (meth)acrylic group, or are hydrogen atoms, alkyl groups, cycloalkyl groups, alkoxy groups or phenyl groups.

The polyfunctional (meth)acrylatesilsesquioxane is effective in strengthening the photochromic layer while expressing excellent photochromic properties.

In the above formula (9), the organic group having the (meth) acrylic group can be exemplified by (meth) acryloxypropyl group and (3-(meth)acryloxypropyl)dimethylsiloxy group.

As the radically polymerizable group other than the (meth)acrylic group, there can be exemplified allyl group, allylpropyl group, allylpropyldimethylsiloxy group, vinyl group, vinylpropyl group, vinyldimethylsiloxy group, (4-cyclohexenyl) ethyldimethylsiloxy group, norbornenylethyl group, norbornenylethyldimethylsiloxy group and N-maleimidepropyl group.

As the alkyl group, there can be exemplified those having 1 to 10 carbon atoms, such as methyl group, ethyl group, n-propyl group, isopropyl group, n-butyl group, sec-butyl group, tert-butyl group, n-pentyl group, n-hexyl group, n-octyl group and isooctyl group.

As the cycloalkyl groups, there can be exemplified those having 3 to 8 carbon atoms, such as cyclopropyl group, cyclobutyl group, cyclooctyl group, cyclohexyl group, cycloheptyl group and cyclooctyl group.

As the alkoxy groups, there can be exemplified those having 1 to 6 carbon atoms, such as methoxy group, ethoxy group, n-propoxy group, isopropoxy group, n-butoxy group, sec-butoxy group and tert-butoxy group.

The above silsesquioxane compound can assume various structures such as cage-like, ladder-like and random structures. The invention, however, preferably uses a mixture of a plurality of compounds having different structures.

In the invention, the above various kinds of highly functional monomers (Xp-3a) to (Xp-3c) can be used alone or in combination. From the standpoint of further improving the photochromic properties and, particularly, fading rate, however, it is desired that the highly functional alkyleneoxy(meth) acrylate (Xp-3a) is used in an amount of 20 to 100 mass% and, specifically, 30 to 100 mass%, the polyfunctional urethane (meth)acrylate (Xp-3b) is used in an amount of 0 to 65 mass% and, specifically, 0 to 60 mass% and the polyfunctional (meth)acrylatesilsesquioxane (Xp-3c) is used in an amount of 0 to 15 mass% and, specifically, 0 to 10 mass% provided the total amount of the polyfunctional monomers (Xp-3) is 100 mass%.

As described above, as the polyfunctional (meth)acrylic monomer (Xp), there can be used the above-mentioned bifunctional monomer (Xp-1), trifunctional monomer (Xp-2) and highly functional monomer (Xp-3) having a functionality of 4 or more alone or in combination. To realize particularly favorable photochromic properties, if the total amount of the polyfunctional monomer (Xp) is presumed to be 100 mass%, the bifunctional monomer (Xp-1) is used in an amount of 50 to 99 mass% and, specifically, 60 to 80 mass%, the trifunctional monomer (Xp-2) is used in an amount of 1 to 50 mass% and, specifically, 20 to 40 mass%, and the highly functional monomer (Xp-3) is used in an amount of 0 to 49 mass% and, specifically, 0 to 20 mass%.

### Non-(meth)acrylic polymerizable monomers (Y);

In the present invention, in addition to using the above-mentioned (meth) acrylic polymerizable monomer (X), it is allowable to use the non-(meth)acrylic polymerizable monomer (Y) having a polymerizable group other than the (meth)acrylic group, as the polymerizable monomer component (A).

The non-(meth)acrylic polymerizable monomer (Y) has no (meth)acrylic group in a molecule thereof, and is used as required.

The non-(meth)acrylic polymerizable monomer (Y) can be represented by a vinyl compound or an allyl compound.

The vinyl compound is desirable for improving the formability of the photochromic curable composition. Its concrete examples are α-methylstyrene and α-methylstyrene dimer. It is, particularly, desired to use the α -methylstyrene and the α-methylstyrene dimer in combination.

The allyl compound is desirable for improving photochromic properties (color density, fading rate) of the photochromic curable composition. The following compounds are concrete examples thereof, though not limited thereto only.
Methoxypolyethylene glycol allyl ether
(preferably having an average molecular weight of 350, 550 or 1500),
Methoxypolyethylene glycol allyl ether
(preferably having an average molecular weight of 350 or 1500),
Polyethylene glycol allyl ether
(preferably having an average molecular weight of 450) ,
Methoxypolyethylene glycol-polypropylene glycol allyl ether
(preferably having an average molecular weight of 750) ,
5 Butoxypolyethylene glycol-polypropylene glycol allyl ether
(preferably having an average molecular weight of 1600),
Methacryloxypolyethylene glycol-polypropylene glycol allyl ether (preferably having an average molecular weight of 560),
Phenoxypolyethylene glycol allyl ether (preferably having an average molecular weight of 600),
Methacryloxypolyethylene glycol allyl ether (preferably having an average molecular weight of 430),
Acryloxypolyethylene glycol allyl ether (preferably having an average molecular weight of 420),
10 Vinyloxypolyethylene glycol allyl ether (preferably having an average molecular weight of 560),
Styryloxypolyethylene glycol allyl ether (preferably having an average molecular weight of 650),
Methoxypolyethylene glycol allyl thioether (preferably having an average molecular weight of 730).

Among the above allyl compounds, the most desired is the methoxypolyethylene glycol allyl ether having, specifically, an average molecular weight of 550.

The above non-(meth)acrylic polymerizable monomer (Y) should be used in such an amount that would not impair the properties improved by the use of the (meth)acrylic polymerizable monomer (X), and is, usually, used in an amount of not more than 20 parts by mass and, preferably, in a range of 0.1 to 20 parts by mass and, more preferably, 0. 5 to 12 parts by mass per 100 parts by mass of the (meth) acrylic polymerizable monomer (X).

### <(B) Photochromic compounds>

To impart photochromic properties to the photochromic curable composition, the invention uses the photochromic compound (B) in an amount of 0.01 to 20 parts by mass, preferably, 0.03 to 10 parts by mass and, more preferably, 0.05 to 5 parts by mass per 100 parts by mass of the (meth) acrylic polymerizable monomer (X).

That is, if the photochromic compound is added in too small amounts, the photochromic properties (specifically, color density) and durability of photochromic properties are not obtained to a sufficient degree. If the photochromic compound is used in too large amounts, on the other hand, the photochromic composition dissolves less in the polymerizable monomer components, homogeneity of the composition decreases, and close adhesion often decreases between the lens material and the photochromic layer, though dependent upon the kinds of the photochromic components.

The photochromic compounds have been known per se. as represented by chromene compounds, fulgimide compounds, spirooxazine compounds and spiropyran compounds, and have been concretely described in, for example, JP-A-2-28154, JP-A-62-288830, WO94/22850 and WO96/14596. The photochromic compounds may be used alone or in a combination of two or more kinds.

In the invention, the chromene compound is desired since it is capable of exhibiting particularly excellent photochromic properties. Specifically, from the standpoint of realizing photochromic properties such as color density, initial color and fading rate as well as excellent light resistance, it is desired to use at least one kind of chromene compound having an indeno [2,1-f] naphtha [1,2-b] pyran skeleton. In particular, the compound having a molecular weight of not less than 540 exhibits specifically excellent color density and fading rate, and is most desirably used in the invention.

Described below are concrete examples of the chromene compounds.

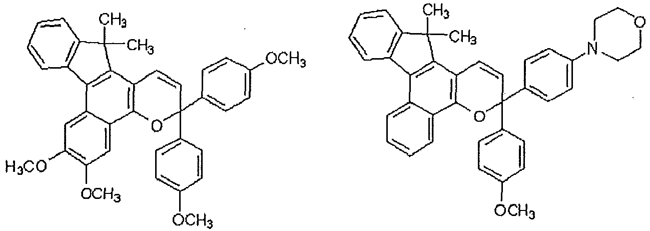

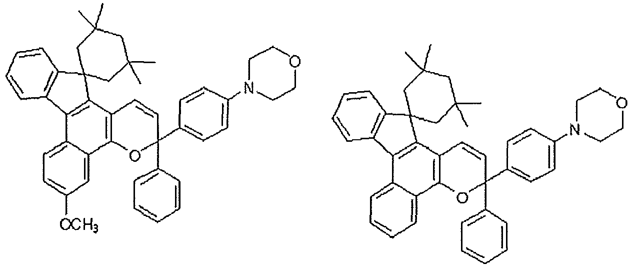

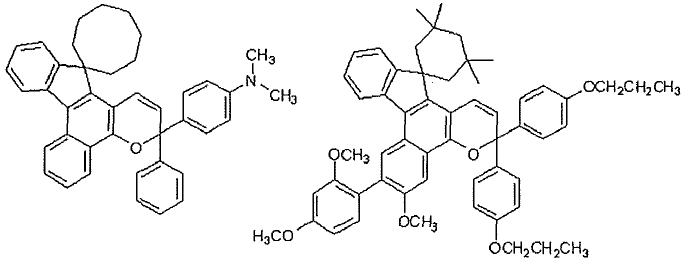

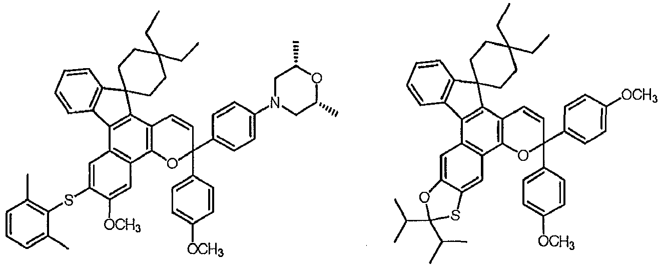

### <Other blending agents>

The photochromic curable composition of the present invention can be blended with blending agents known per se. in addition to the above-mentioned polymerizable monomer components (A) and the photochromic compounds (B).

For instance, a polymerization initiator is blended to form a photochromic layer of the photochromic cured body by polymerizing and curing the photochromic curable composition.

As the polymerization initiator, a thermal polymerization initiator or a photo polymerization initiator is used depending on the method of polymerization and curing in forming the photochromic layer.

The thermal polymerization initiator is used for forming a cured body by heating the photochromic curable composition and is particularly preferably used if a thick photochromic layer is to be formed.

As the polymerization initiator, there can be exemplified diacyl peroxides such as benzoyl peroxide, p-chlorobenzoyl peroxide, decanoyl peroxide, lauroyl peroxide and acetyl peroxide; peroxy esters such as t-butylperoxy-2-ethyl hexanate, t-butylperoxyneodecanoate, cumylperoxyneodecanoate and t-butylperoxybenzoate; percarbonates such as diisopropylperoxydicarbonate and di-sec-butylperoxydicarbonate; and azo compounds such as azobisisobutylonitrile.

The photo polymerization initiator is used for forming the cured body of the photochromic curable composition by the irradiation with light, and is advantageous particularly if a thin photochromic layer is to be formed.

Described below are examples of the photo polymerization initiator.

### Acetophenone compounds such as;

1-Phenyl-2-hydroxy-2-methylpropane-1-one,
1-Hydroxycyclohexylphenyl ketone, and
1-(4-Isopropylphenyl)-2-hydroxy-2-methylpropane-1-one α-Dicarbonyl compounds such as;
1,2-Diphenylethanedione, and
Methylphenyl glycoxylate.

### Acylphosphinoxide compounds such as;

2,6-Dimethylbenzoyldiphenyl phosphinoxide,
2,4,6-Trimethylbenzoyldiphenyl phosphinoxide,
Methyl ester of 2,4,6-trimethylbenzoyldiphenyl phosphate,
2,6-Dichlorobenzoyldiphenyl phosphinoxide, and
2,6-Dimethoxybenzoyldiphenyl phosphinoxide.

The above various kinds of polymerization initiators can be used in a single kind or in a mixture of two or more kinds.

Further, the thermal polymerization initiator and the photo polymerization initiator can be used in combination. If the photo polymerization initiator is used, a known polymerization accelerator such as tertiary amine or the like can be used in combination.

In the invention, the polymerization initiator (thermal polymerization initiator and/or photo polymerization initiator) is used, usually, in an amount in a range of 0.001 to 10 parts by mass and, specifically, 0.01 to 5 parts by mass per 100 parts by mass of the above-mentioned (meth)acrylic polymerizable monomer (X).

As the blending agents other than the above polymerization initiator, there can be exemplified various kinds of additives such as parting agent, ultraviolet ray absorber, infrared ray absorber, ultraviolet ray stabilizer, antioxidant, anti-tinting agent, antistatic agent, fluorescent dye, pigment, perfume and the like.

In the invention, in particular, it is desired to add the ultraviolet ray stabilizer since it helps further improve light resistance of the photochromic compound.

The ultraviolet ray stabilizer can be exemplified by hindered amine photo stabilizer, hindered phenol antioxidant and sulfur antioxidant. Described below are their preferred examples.
Bis(1,2,2,6,6-pentamethyl-4-piperidyl) sebacate;
Adekastab LA-52, LA-57, LA-62, LA-63, LA-67, LA-77, LA-82,
and LA-87 manufactured by Asahi Denka Kogyo Co.;
2,6-Di-t-butyl-4-methyl-phenol;
2,6-Ethylenebis(oxyethylene)bis[3-(5-5-butyl-4-hydroxy-m-tolyl) propionate]; and
IRGANOX 1010, 1035, 1075, 1098, 1135, 1141, 1222, 1330, 1425, 1520, 259, 3114, 3790, 5057, 565 manufactured by Chiba Specialty Chemicals Co.

The ultraviolet ray stabilizer is used, though there is no specific limitation, usually, in an amount in a range of 0.001 to 10 parts by mass and, specifically, 0.01 to 1 part by mass per 100 parts by mass of the above (meth) acrylic polymerizable monomer (X).

If the hindered amine photo stabilizer is used in too large amounts, the light resistances of the photochromic compounds are improved differently, and the color tones may differ as the compounds undergo the aging. It is, therefore, desired that the hindered amine photo stabilizer is used in an amount of 0.5 to 30 mols, preferably, 1 to 20 mols and, more preferably, 2 to 15 mols per mole of the photochromic compound.

The above-mentioned photochromic curable composition of the invention is prepared by mixing the components together. Here, however, the epoxy group-containing monomer (Xm²) which is an essential component is highly reactive and, therefore, is desired to be stored separately from the other components, and is mixed with other components just before it is to be used. This is because if the epoxy group-containing monomer (Xm²) is stored in the same package as the other components being mixed together therewith, then gelation may take place during the storage.

In preparing the curable composition, further, it is desired that the components other than the epoxy group-containing monomer (Xm²) are mixed together in advance, the photochromic compound (B) is stored being dissolved in the polymerizable monomer (A), and just before the use, the epoxy group-containing monomer (Xm²) is mixed therewith at a temperature not higher than room temperature.

### <Production of the photochromic laminate (photochromic lens) >

The photochromic laminate is produced by using the above-mentioned photochromic curable composition of the present invention, i.e., by applying the curable composition onto the surface of the lens material (plastic lens) to form a layer of the curable composition, and by polymerizing and curing the layer of the curable composition.

The curable composition is polymerized and cured by heating, by the irradiation with ultraviolet rays, α-rays, β -rays or γ-rays, or by using both of them depending on the kind of the polymerization initiator added to the composition.

By using the photochromic curable composition of the invention, however, even if a thick photochromic layer is formed having a thickness of 100 to 1500 µm and, specifically, 150 to 800 µm, it is allowed to assure excellent photochromic properties and close adhesion to the lens material. Most desirably, therefore, a layer of the curable composition is formed by using means adapted to forming a thick photochromic layer, and is polymerized and cured.

The above means will now be described. Referring, for example, to Fig. 1, a lens material 1 is opposed to a mold 2 (e.g., a glass mold) for cast polymerization, and is fixed thereto. Here, the mold 2 is equipped with a jig 4 such as elastomer gasket or spacer so as to form a space (cavity) 3 for forming the photochromic layer between the plastic lens material 1 and the mold 2.

Into the thus formed space 3 for forming, the above-mentioned photochromic curable composition of the invention blended with the thermal polymerization initiator is injected, and is polymerized and cured by heating so as to form a thick photochromic layer which is a cured body of the curable composition on the surface of the lens material 1.

The polymerization and curing can be conducted by being heated in, for example, an air furnace or in a water bath. In this case, if the curable composition has been blended with the thermal polymerization initiator and with the photo polymerization initiator, the polymerization and curing are effected by heating and, thereafter, the finishing polymerization and curing can be effected by the irradiation with light from the side of the glass mold 2.

The heating conditions for polymerization and curing may differ depending on the kind and amount of the polymerization initiator that is added and on the composition of the polymerizable monomer component (A), and cannot be definitely defined. Usually, however, it is desired to employ a method which starts the polymerization at a relatively low temperature, slowly elevates the temperature, and effects the heating at a high temperature just prior to finishing the polymerization (a so-called tapered polymerization). Further, like the temperature for heating, the time for polymerization varies depending on various kinds of factors and, therefore, is set to meet various kinds of factors. Usually, however, the conditions are desirably so set that the polymerization and curing are completed in 2 to 24 hours.

If a thin photochromic layer is to be formed, a thin layer of the curable composition blended with the photo polymerization initiator is formed on the surface of the lens material by spin-coating or the like method, and is polymerized and cured by the irradiation with light so as to form the photochromic layer.

The plastic lens material used for forming the photochromic laminate as described above, can be represented by (meth)acrylic resin, polycarbonate resin, allyl resin, thiourethane resin, urethane resin and thioepoxy resin. Any of them can be used as the plastic lens material of the invention.

Among such plastic lens materials, those formed by using the (meth)acrylic resin and the allyl resin (CR39, etc.) are specifically effective.

Here, prior to fixing the lens material 1 to the mold 2, close adhesion can be more effectively improved if the surfaces of the lens material 1 on which the photochromic layer is to be formed are treated with an alkali, with an acid, with a surfactant, with UV ozone, or polished with inorganic or organic fine particles, treated with a primer, or treated with plasma or corona discharge.

The treatment with an alkali is specifically effective in improving close adhesion. As a condition for treatment with an alkaline, it is allowable to use, for example, 20% sodium hydroxide. The photochromic curable composition of the invention is capable of improving close adhesion to the plastic lens material and, hence, the treatment with a primer can be omitted.

The photochromic lens (photochromic laminate) obtained as described above can be put into use through a machining step such as polishing or edging. Here, however, to prevent the occurrence of scratches when put to use, the photochromic lenses may be further covered with a hard coating.

The hard coating can be formed by using any known coating agent (hard-coating agent) without limitation. Concretely, there can be used a silane coupling agent; a hard-coating agent comprising chiefly a sol of an oxide of silicon, zirconium, antimony, aluminum or titanium; or a hard-coating agent comprising chiefly an organic high molecular material.

If the hard coating is to be formed, the hard-coating composition is applied and cured by the dipping method, spin-coating method or spray method, or the coating composition is applied by the flowing method.

As the curing method after the application, the composition is dried with the dry air or is air-dried in the air, and is heat-treated at such a temperature that would not cause the photochromic laminate to be deformed. The hard coating is thus cured and formed.

In addition to forming the hard coating, the surfaces of the photochromic laminate of the invention can be, further, subjected to the treatment for preventing reflection, such as depositing a thin film of a metal oxide like SiO₂, TiO₂ or ZrO₂ or applying a thin film of an organic high molecular material, antistatic treatment, or any secondary treatment.

### EXAMPLES

The invention will now be described in detail by way of Examples and Comparative Examples. The invention, however, is in no way limited the Examples only. Also described below are abbreviations and names of the compounds that are used.

(A) Polymerizable monomer components:
   (X) (Meth)acrylic polymerizable monomers.
   Polyfunctional monomers (Xp).
   (Xp-1) Bifunctional monomers.
   BPE100: 2,2-Bis(4-methacryloyloxypolyethoxyphenyl)propane (average recurring number of ethyleneoxy group of 2.6, average molecular weight of 478)
   BPE500: 2,2-Bis(4-methacryloyloxypolyethoxyphenyl) propane (average recurring number of ethyleneoxy group of 10, average molecular weight of 804)
   3G: Triethylene glycol dimethacrylate
   9G: Polyethylene glycol dimethacrylate (average recurring number of ethyleneoxy group of 9, average molecular weight of 536)
   14G: Polyethylene glycol dimethacrylate (average recurring number of ethyleneoxy group of 14, average molecular weight of 770)
   APG400: Polypropylene glycol diacrylate (average length of propylene glycol chain of 7, average molecular weight of 536)
   A-BPE: 2,2-Bis(4-acryloyloxypolyethoxyphenyl)propane (average recurring number of ethyleneoxy group of 10, average molecular weight of 776)
   A400: Polyethylene glycol diacrylate (average recurring number of ethyleneoxy group of 9, average molecular weight of 508)
   A200: Tetraethylene glycol diacrylate
   4PG: Tetrapropylene glycol dimethacrylate
   APC: Polycarbonate monomer

### (Production of APC monomer)

To 300 g (0. 6 mols) of a polycarbonate diol (number average molecular weight of 500) obtained by the phosgenation of a hexamethylene glycol (50 mol%) and a pentamethylene glycol (50 mol%), there were added:
acrylic acid, 108 g (2.5 mols),
benzene, 300 g,
p-toluenesulfonic acid, 11 g (0.06 mols), and
p-methoxyphenol, 0.3 g (700 ppm relative to
   polycarbonate diol),
and were reacted together while being refluxed.

Water formed by the reaction was boiled together with the solvent, and water only was removed out of the system by a separator while the solvent was returned back to the reaction vessel. The conversion of the reaction was confirmed based on the amount of water removed from the reaction system, the amount of water removed out of the reaction system was confirmed to be 21.6 g, and the reaction was halted. Thereafter, the reaction product was dissolved in 600 g of benzene, neutralized with 5% sodium hydrogencarbonate, and was washed 5 times each with 300 g of 20% salt water to obtain 210 g of a clear liquid.

(Xp-2) Trifunctional monomer.
   TMPT: Trimethylolpropane trimethacrylate (molecular weight,338)
(Xp-3) Highly functional monomers.
   DTMPT: Ditrimethylolpropane tetramethacrylate
   U6HA: Urethane oligomer hexaacrylate (average molecular weight, 1019)
   PMS1: Silsesquioxane monomer

### <Synthesis of PMS1>

248 Milliliters of ethanol and 54 g (3.0 mols) of water were added to 248 g (1.0 mol) of a 3-trimethoxysilylpropyl methacrylate, and 0.20 g (0.005 mols) of sodium hydroxide was added thereto as a catalyst to conduct the reaction at 30°C for 3 hours.

After the starting materials were confirmed to have extinguished, the reaction product was neutralized with dilute hydrochloric acid followed by the addition of 174 ml of toluene, 174 ml of heptane and 174 g of water, and the aqueous layer was removed.

Thereafter, the organic layer was washed with water until the aqueous layer became neutral, and the solvent was condensed to obtain a silsesquioxane monomer (PMS1).

From the 1H-NMR, it was confirmed that the starting materials had been completely consumed. From the 29Si-NMR, further, it was confirmed that the silsesquioxane monomer was a mixture of those having a cage-like structure, ladder-like structure and random structure.

The silsesquioxane monomer (PMS1) was measured for is molecular weight by the gel permeation chromatographic method (GPC method) to have a weight average molecular weight of 480.

(Xm) Monofunctional monomers.
(Xm¹) Epoxy group-containing monomers.
   GMA: Glycidyl methacrylate (molecular weight, 142)
   EOGMA: 2-Glycidyloxyethyl methacrylate
(Xm²): Isocyanate group-containing monomers.
   MOl: (2-Isocyanatoethyl methacrylate)
   AOl: (2-Isocyanatoethyl acrylate)
(Xm³): Other monofunctional (meth)acrylic monomers.
   MePEGMA: Methyl ether polyethylene glycol methacrylate (average recurring number of ethyleneoxy groups of 23, average molecular weight of 1068)
   M90G: Methoxypolyethylene glycol methacrylate (average length of ethylene glycol chain of 9, average molecular weight of 468)

(Y) Non-(meth)acrylic polymerizable monomers.
   α MS : α-Methylstyrene
   MSD: α-Methylstyrene dimer

(B) Photochromic compounds.
   PC1: 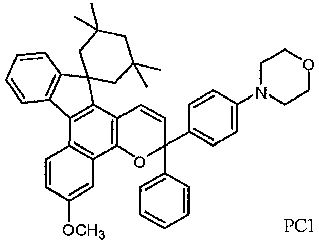
   PC2: 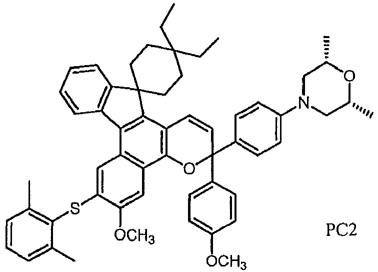
   PC3:

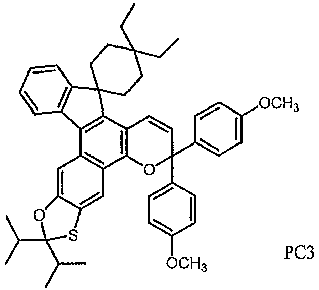

Thermal polymerization initiators.
ND: t-Butylperoxyneodecanoate (trade name: Perbutyl ND, manufactured by Nihon Yushi Co.)
O: 1,1,3,3-Tetramethylbutylperoxy-2-ethyl hexanoate (trade name: Perocta O, manufactured by Nihon Yushi Co.)

Other blending agents (additives).

Stabilizer.
HALS: Bis(1,2,2,6,6-pentamethyl-4-piperidyl) sebacate (molecular weight of 508)

Plastic lens material.
CR39: Allyl resin

Lens material M1: Methacrylic resin lens material.

### (Production method)

Components of the following recipe;

| | |
|---|---|
| TMPT | 10 parts by mass, |
| 3PG | 43 parts by mass, |
| EB4858 (bifunctional urethane methacrylate manufactured by Daicel UCB Co.) | 25 parts by mass, |
| A400 | 16 parts by mass, |
| M90G | 5 parts by mass, |
| Glycidyl metthacrylate | 1 part by mass, |
| α MS | 0.5 parts by mass, |
| MSD | 1.5 parts by mass, |
| HALS | 0.1 part by mass |
| Polymerization initiators, | |
| PerbutylND | 1 part by mass, |
| Perocta O | 0.1 part by mass, |

were mixed together to a sufficient degree, and the obtained mixed solution was poured into a mold constituted by a glass plate and a gasket of an ethylene-vinyl acetate copolymer. Substantially the whole amount of the polymerizable monomer was polymerized by cast polymerization.

The polymerization was conducted in an air furnace; i.e., the temperature was gradually elevated up to 30°C to 90°C over 18 hours, and the temperature was held at 90°C for 2 hours. After the polymerization has been finished, the cured body was taken out from the glass mold, and a lens material M1 comprising the methacrylic resin was obtained.

Lens material M2: Methacrylic resin lens material

### (Production method)

Components of the following recipe;

| | |
|---|---|
| BPE100 | 29 parts by mass, |
| BPE500 | 5 parts by mass, |
| TMPT | 7 parts by mass, |
| A200 | 5 parts by mass, |
| Tetraethylene glycol dimethacrylate | 45 parts by mass, |
| Glycidyl methacrylate | 1 part by mass, |
| α MS | 8 parts by mass, |
| MSD | 2 parts by mass |
| Polymerization initiators, | |
| Perbutyl ND | 1 part by mass, |
| Perocta O | 0.1 part by mass, |

were mixed together to a sufficient degree, and a lens material M2 comprising the methacrylic resin was obtained in the same manner as that of producing the lens material M1.

Lens material M3: Methacrylic resin lens material

### (Production method)

Components of the following recipe;

| | |
|---|---|
| BPE100 | 25 parts by mass, |
| TMPT | 11 parts by mass, |
| DTMPT | 11 parts by mass, |
| A400 | 10 parts by mass, |
| Tetraethylene glycol dimethacrylate | 29 parts by mass, |
| Glycidyl methacrylate | 1 part by mass, |
| α MS | 8 parts by mass, |
| MSD | 2 parts by mass, |
| Polymerization initiators, | |
| PerbutylND | 1 part by mass, |
| Perocta O | 0.1 part by mass, |
| BPE500 | 5 parts by mass, |

were mixed together to a sufficient degree, and a lens material M3 comprising the methacrylic resin was obtained in the same manner as that of producing the lens material M1.

### <Example 1>

Components of the following recipe;

| | |
|---|---|
| Bifunctional monomers (Xp-1) | |
| BPE500 | 38 parts by mass, |
| A-BPE | 4 parts by mass, |
| 14G | 5 parts by mass, |
| A400 | 18 parts by mass, |
| Trifunctional monomer (Xp-2) | |
| TMPT | 29 parts by mass, |
| Monofunctional monomers (Xm) | |
| Epoxy group-containing monomer (Xm1), | |
| GMA | 1 part by mass |
| Non-(meth)acrylic polymerizable monomers (Y) | |
| *α*MS | 1 part by mass, |
| MSD | 1.5 parts by mass, |
| Additive | |
| HALS (stabilizer) | 0.1 part by mass, |

were mixed together and stirred. To the obtained mixed solution, there were added:

**Photochromic compounds (B)**

| | |
|---|---|
| PC1 | 0.12 parts by mass, |
| PC2 | 0.04 parts by mass, |
| PC3 | 0.12 parts by mass, |

which were stirred sufficiently and were dissolved.

Thereafter, there were added 5 parts by mass of MO1 as the isocyanate group-containing monofunctional monomer (Xm²), 1 part by mass of Perbutyl ND and 0.1 part by mass of Perocta O as the thermal polymerization initiators to thereby obtain a photochromic curable composition.

The composition of the polymerizable monomer component (A) was as shown in Table 1, and components of the composition were as shown in Table 3.

A photochromic laminate (photochromic lens) was produced by using the mold for forming lens shown in Fig. 1 and the above-mentioned photochromic curable composition.

Concretely speaking, the above photochromic curable composition was poured into a cavity 3 in the lens-forming mold obtained by winding an adhesive tape 4 around the glass mold 2 and the side surface of the CR39 lens of the plastic lens material 1. The photochromic curable composition was then polymerized.

The CR39 of the plastic lens material was the one that was dewaxed with acetone to a sufficient degree and was alkali-treated in a 20% sodium hydroxide aqueous solution maintained at 60°C while applying ultrasonic waves thereto for 10 minutes.

The polymerization was conducted in the air furnace; i.e., the temperature was gradually elevated up to 30°C to 90°C over 18 hours, and was held at 90°C for 2 hours. After the polymerization has been finished, the glass mold 2 was removed, and there was obtained a photochromic laminate comprising a cured body (photochromic layer) of the photochromic curable composition having a thickness of 0.5 mm and a plastic lens material of a thickness of 2 mm which are closely adhered together.

The obtained photochromic laminate possessed photochromic properties of a maximum absorption wavelength of 590 nm, a color density of 1.10, a fading rate of 52 seconds, and a light resistance of 92%.

These properties were evaluated as described below.

### Photochromic properties;

The polymer surface of the obtained sample photochromic laminate was irradiated with the light from a xenon lamp L-2480 (300W) SHL-100 manufactured by Hamamatsu Photonics Co. through an aeromass filter (manufactured by Corning Co.) at 20°C ± 1°C at a beam intensity on the surface of 365 nm = 2.4 mW/cm² and 245 nm = 24 µ W/cm² for 120 seconds to develop color to thereby measure the photochromic properties of the laminate.

The photochromic properties, light resistance thereof and closely adhering property were evaluated in a manner as described below. The results were as shown in Table 5.

### 1) Maximum absorption wavelength (λmax):

A maximum absorption wavelength after having developed color as found by using a spectrophotometer (instantaneous multi-channel photo detector MCPD3000) manufactured by Otsuka Denshi Kogyo Co. The maximum absorption wavelength is related to the color tone at the time of developing color.

### 2) Color density { ε (120) - ε (0)} :

A difference between the absorbency {ε (120)} after irradiated with light for 120 seconds at the maximum absorption wavelength and ε(0).

The higher the value, the more excellent the photochromic properties.

### 3) Fading rate [t1/2 (sec.)]:

The time until the light absorbency of the sample at the maximum wavelength decreases down to one-half of {ε (120) - ε (0)} when it is no longer irradiated with light after having been irradiated with light for 120 seconds.

The shorter the time, the quicker the extinction of color and, therefore, the more excellent the photochromic properties.

### 4) Light resistance:

The following deterioration acceleration testing was conducted to evaluate the light resistance of color developed by the irradiation with light. Namely, by using a xenon weatherometer (X25, manufactured by Suga Shikenki Co.), a lens having the photochromic coating formed as described above was caused to be deteriorated in an accelerated manner for 300 hours. Thereafter, the color density was evaluated before and after the testing. The color density (AO) before the testing and the color density (A200) after the testing were measured, and a value { (A200/AO) x 100} was found as a remaining ratio (%). The larger the remaining ratio, the larger the light resistance of the color.

### 5) Close adhesion;

The sample photochromic laminate was dipped in boiling water of 100°C, taken out therefrom one hour later, readily dipped in iced water of 0°C for 10 minutes, taken out therefrom and was, thereafter, evaluated with the eye in regard to if the photochromic laminate was maintaining close adhesion. The same operation was repeated to evaluate on the following basis.
1. No peeling after 5 cycles.
2. No peeling up to the fourth cycle but partly peeled in the fifth cycle.
3. No peeling up to the third cycle but partly peeled in the fourth cycle.
4. No peeling up to the second cycle but partly peeled in the third cycle.
5. No peeling in the first cycle but partly peeled in the second cycle.
6. Partly peeled in the first cycle.

### <Examples 2 to 19>

Photochromic laminates were produced by preparing photochromic curable compositions in the same manner as in Example 1 but using the polymerizable monomer components (A) shown in Tables 1 and 2, and using the compositions and the plastic lens materials shown in Tables 3 and 4. The photochromic laminates were evaluated to obtain results as shown in Table 5.

**Table 1**

| | (Meth)acrylic monomers (X) | | | | | | | | |
|---|---|---|---|---|---|---|---|---|---|
| *1 | *2 | *3 | *4 | *5 | *6 | *7 | *8 | *9 | *10 |
| 1 | BPE500 (38) /A-BPE (4) / 14G (5) /A400 (18) | TMPT (29) | - | 94 | GMA(1) | MOI (5) | 5 | - | 6 |
| 2 | BPE500 (35) /BPE100 (10) / 14G (5) /A200 (20) | TMPT (26) | - | 96 | GMA(1) | MOI (3) | 3 | - | 4 |
| 3 | BPE500 (38) / A400 (10) /4PG (5) | TMPT (30) | - | 83 | GMA(2) | MOI (10) | 5 | M90G(5) | 17 |
| 4 | BPE500 (39) / A400(10) | TMPT (28) | U6HA(5) / DTMPT (5) | 87 | GMA(0.5) | MOI (12.5) | 25 | - | 13 |
| 5 | BPE500 (35) /A-BPE (10) / 9G(15) /A400 (15) | TMPT (9) | DTMPT (9) | 93 | GMA(0.2) | MOI (6.8) | 34 | - | 7 |
| 6 | BPE500 (35)/ A-BPE(4)/14G(5) | TMPT (10) | DTMPT(30) | 84 | GMA(2) | MOI (8) | 4 | M90G(6) | 16 |
| 7 | BPE500 (38) /A-BPE (4) / 14G(5) /A400 (18) | TMPT (25) | - | 90 | GMA (1) | MOI (7) | 7 | MePEGMA(2) | 10 |
| 8 | BPE500 (38) /A-BPE (4) / 14G(5) /A400 (12) | TMPT (25) | - | 84 | GMA(1.5) | AOI (8.5) | 5.7 | M90G(6) | 16 |
| 9 | BPE500 (40) / 14G(5) /A400 (22) | TMPT(27) | - | 94 | EOGMA(0.5) | MOI (5.5) | 11 | - | 6 |
| 10 | 4PG (30) /A-BPE (5) / 3G(10) /APG400 (15) | TMPT (30) | - | 90 | GMA(1.5) | AOI (8.5) | 5.7 | - | 10 |
| 11 | BPE500 (35) / 14G(15)/APC(15) | TMPT (19) | PMS1 (10) | 94 | GMA(1) | MOI (5) | 5 | - | 6 |
| 12 | BPE500 (25) / 14G (20) /APC (10) | TMPT (17) | DTMPT (17) / PMS1 (5) | 94 | GMA(1) | MOI (5) | 5 | - | 6 |

| | | | | | | | | | |
|---|---|---|---|---|---|---|---|---|---|
| *1: Example, *2: Xp-1 (amount), *3: Xp-2 (amount), *4: Xp-3 (amount), *5: Total, *6: Xm¹ (amount), *7: Xm² (amount), *8: Xm²/Xm¹, *9: Xm³ (amount), *10: Total | | | | | | | | | |

**Table 2**

| | (Meth)acrylic monomers (X) | | | | | | | | |
|---|---|---|---|---|---|---|---|---|---|
| *1 | *2 | *3 | *4 | *5 | *6 | *7 | *8 | *9 | *10 |
| 13 | A-BPE (10) /BPE100 (30) / 9G (10) /A200 (9) | TMPT (30) | - | 89 | GMA (1) | MOI (10) | 10 | - | 11 |
| 14 | 4PG (30) /A400 (21) | TMPT (30) | DTMPT(15) | 96 | GMA (1) | MOI (3) | 3 | - | 4 |
| 15 | BPE500 (38) /A400 (10) / APG400(5)/14G(5) | TMPT (30 ) | - | 88 | GMA (2) | MOI (10) | 5 | - | 12 |
| 16 | BPE500 (19) / A400(10) | TMPT (35) | U6HA (25) / DTMPT (5) | 94 | GMA (1) | MOI (5) | 5 | - | 6 |
| 17 | BPE500 (36) /A-BPE (6) / 14G(3) /A400 (20) | TMPT (29) | - | 94 | GMA (1) | MOI (5) | 5 | - | 6 |
| 18 | BPE500 (30) /A-BPE (10) 14G (5) /A400 (16) | TMPT (27) | - | 88 | EOGMA(0.5) | MOI (4.5) | 9 | M90G(7) | 12 |
| 19 | BPE500(30)/14G(25)/ APC (10) | TMPT (24) | PMS1(5) | 94 | GMA (1) | MOI (5) | 5 | - | 6 |

| | | | | | | | | | |
|---|---|---|---|---|---|---|---|---|---|
| *1: Example, *2: Xp-1 (amount), *3: Xp-2 (amount), *4: Xp-3 (amount), *5: Total, *6: Xm¹ (amount), *7: Xm² (amount), *8: Xm²/Xm¹, *9: Xm³ (amount), *10: Total | | | | | | | | | |

**Table 3**

| *1 | *2 | Polymerizable monomers (A) | | (B) Photochromic compounds (amount) | Additive (amount) | Initiators (parts) |
|---|---|---|---|---|---|---|
| | | (X) / (Meth)acrylic | (Y) / Non-(meth)acrylic | | | |
| 1 | CR39 | 100 | αMS (0.5) /MSD (1.5) | PC1 (0.12) /PC2 (0.04) / PC3 (0.12) | HALS (0.1) | ND (1) O (0.1) |
| 2 | CR39 | 100 | αMS (0.5) /MSD (1.5) | PC1 (0.12) /PC2 (0.04) / PC3 (0.12) | HALS (0.1) | ND (1) O (0.1) |
| 3 | CR39 | 100 | - | PC1 (0.12) /PC2 (0.04) / PC3 (0.12) | HALS (0.1) | ND (1) O (0.1) |
| 4 | CR39 | 100 | αMS (0.5) /MSD (1.5) | PC1 (0.12) /PC2 (0.04) / PC3 (0.12) | HALS (0.1) | ND (1) O (0.1) |
| 5 | CR39 | 100 | αMS (0.5) /MSD (1.5) | PC1 (0.12) /PC2 (0.04) / PC3 (0.12) | HALS (0.1) | ND (1) O (0.1) |
| 6 | CR39 | 100 | αMS (0.5) /MSD (1.5) | PC1 (0.12) /PC2 (0.04) / PC3 (0.12) | HALS (0.1) | ND (1) O (0.1) |
| 7 | CR39 | 100 | - | PC1 (0.12) /PC2 (0.04) / PC3 (0.12) | HALS (0.1) | ND (1) O (0.1) |
| 8 | CR39 | 100 | - | PC1 (0.12) /PC2 (0.04) / PC3 (0.12) | HALS (0.1) | ND (1) O (0.1) |
| 9 | CR39 | 100 | αMS (0.5) /MSD (1.5) | PC1 (0.12) /PC2 (0.04) / PC3 (0.12) | HALS (0.1) | ND (1) O (0.1) |
| 10 | CR39 | 100 | αMS (0.5) /MSD (1.5) | PC1 (0.12) /PC2 (0.04) / PC3 (0.12) | HALS (0.1) | ND (1) O (0.1) |
| 11 | CR39 | 100 | αMS (0.5) /MSD (1.5) | PC1 (0.12) /PC2 (0.04) / PC3 (0.12) | HALS (0.1) | ND (1) O (0.1) |
| 12 | CR39 | 100 | αMS (0.5) /MSD (1.5) | PC1 (0.12) /PC2 (0.04) / PC3 (0.12) | HALS (0.1) | ND (1) O (0.1) |

| | | | | | | |
|---|---|---|---|---|---|---|
| *1: Example, *2: Material | | | | | | |

**Table 4**

| *1 | *2 | Polymerizable monomers (A) | | (B) Photochromic compounds (amount) | Additive (amount) | Initiators (parts) |
|---|---|---|---|---|---|---|
| | | (X) / (Meth)acrylic | (Y) / Non-(meth)acrylic | | | |
| 13 | M1 | 100 | αMS (0.5) /MSD (1.5) | PC1 (0.12) /PC2 (0.04) / PC3 (0.12) | HALS (0.0) | ND (1) O (0.0) |
| 14 | M1 | 100 | - | PC1 (0.12) /PC2 (0.04) / PC3 (0.12) | HALS (0.1) | ND (1) O (0.1) |
| 15 | M2 | 100 | αMS (0.5) /MSD (1.5) | PC1 (0.12) /PC2 (0.04) / PC3 (0.12) | HALS (0.1) | ND (1) O (0.1) |
| 16 | M2 | 100 | | PC1 (0.12) /PC2 (0.04) / PC3 (0.12) | HALS (0.1) | ND (1) O (0.1) |
| 17 | M2 | 100 | αMS (0.5) /MSD (1.5) | PC1 (0.12) /PC2 (0.04) / PC3 (0.12) | HALS (0.1) | ND (1) O (0.1) |
| 18 | M3 | 100 | αMS (0.5) /MSD (1.5) | PC1 (0.12) /PC2 (0.04) / PC3 (0.12) | HALS (0.1) | ND (1) O (0.1) |
| 19 | M1 | 100 | αMS (0.5) /MSD (1.5) | PC1 (0.12) /PC2 (0.04) / PC3 (0.12) | HALS (0.1) | ND (1) O (0.1) |

| | | | | | | |
|---|---|---|---|---|---|---|
| *1: Example, *2: Material | | | | | | |

**Table 5**

| Example No. | Max. absorption wavelength (λmas) | Color density | Fading rate (sec.) | Light resistance (%) | Close adhesion |
|---|---|---|---|---|---|
| 1 | 590 | 1.10 | 52 | 92 | 1 |
| 2 | 589 | 1.09 | 50 | 92 | 2 |
| 3 | 590 | 1.07 | 52 | 91 | 1 |
| 4 | 591 | 1.04 | 60 | 89 | 1 |
| 5 | 590 | 0.98 | 66 | 85 | 1 |
| 6 | 590 | 1.00 | 64 | 90 | 1 |
| 7 | 591 | 1.05 | 60 | 92 | 1 |
| 8 | 590 | 1.10 | 50 | 91 | 1 |
| 9 | 589 | 1.10 | 51 | 92 | 1 |
| 10 | 580 | 1.08 | 59 | 92 | 1 |
| 11 | 590 | 1.10 | 44 | 92 | 1 |
| 12 | 590 | 1.10 | 47 | 92 | 1 |
| 13 | 588 | 1.08 | 55 | 91 | 1 |
| 14 | 580 | 1.04 | 63 | 90 | 2 |
| 15 | 589 | 1.08 | 55 | 91 | 1 |
| 16 | 588 | 0.90 | 72 | 80 | 1 |
| 17 | 590 | 1.09 | 54 | 92 | 1 |
| 18 | 589 | 1.05 | 56 | 86 | 1 |
| 19 | 590 | 1.10 | 45 | 92 | 1 |

### <Comparative Examples 1 to 6>

Photochromic laminates were produced by preparing photochromic curable compositions in the same manner as in Example 1 but using the polymerizable monomer components (A) shown in Table 6, and using the compositions and the plastic lens materials shown in Table 7. The photochromic laminates were evaluated to obtain results as shown in Table 8.

**Table 6**

| | (Meth)acrylic monomers (X) | | | | | | | | |
|---|---|---|---|---|---|---|---|---|---|
| *1 | *2 | *3 | *4 | *5 | *6 | *7 | *8 | *9 | *10 |
| 1 | BPE500 (10) / A400(20)/14G(10) | TMPT (20 ) | - | 60 | GMA(10) | MOI (30) | 3 | - | 40 |
| 2 | BPE500 (30) / A-BPE (10) / 14G(10)/A400(15) | TMPT (20 ) | - | 85 | GMA (10) | MOI (5) | 0.5 | - | 15 |
| 3 | BPE100(20)/ A-BPE (10) / 14G(10)/A400(15) | TMPT (15 ) | DTMPT(15) | 85 | - | MOI (15) | - | - | 15 |
| 4 | BPE500 (30) / APG400 (5) / 14G(10)/A400(10) | TMPT (30 ) | - | 85 | GMA(10) | - | - | M90G(5) | 15 |
| 5 | BPE500 (40) / 14G(5) /A400 (18) | TMPT (35 ) | - | 98 | GMA(0.5) | MOI (1.5) | 3 | - | 2 |
| 6 | BPE100 (10) / BPE500(30)/14G(10) | TMPT (30 ) | - | 80 | GMA(0.4) | MOI (19. 6) | 49 | - | 20 |

| | | | | | | | | | |
|---|---|---|---|---|---|---|---|---|---|
| *1: Comparative Example, *2: Xp-1 (amount), *3: Xp-2 (amount), *4: Xp-3 (amount), *5: Total, *6: Xm¹ (amount), *7: Xm² (amount), *8: Xm²/Xm¹, *9: Xm³ (amount), *10: Total | | | | | | | | | |

**Table 7**

| *1 | *2 | Polymerizable monomers (A) | | (B) Photochromic compounds (amount) | Additive (amount) | Initiators (parts) |
|---|---|---|---|---|---|---|
| | | (X) / (Meth)acrylic | (Y) / Non-(meth)acrylic | | | |
| 1 | CR39 | 100 | αMS (0.5) /MSD (1.5) | PC1 (0.12) /PC2 (0.04) / PC3(0.12) | HALS (0.1) | ND (1) O (0.1) |
| 2 | CR39 | 100 | - | PC1 (0.12) /PC2 (0. 04) / PC3(0.12) | HALS (0.1) | ND (1) O (0.1) |
| 3 | CR39 | 100 | - | PC1 (0.12) /PC2 (0.04) / PC3(0.12) | HALS (0.1) | ND (1) O (0.1) |
| 4 | CR39 | 100 | - | PC1 (0.12) /PC2 (0.04) / PC3(0.12) | HALS (0.1) | ND (1) O (0.1) |
| 5 | CR39 | 100 | - | PC1 (0.12) /PC2 (0.04) / PC3(0.12) | HALS (0.1) | ND (1) O (0.1) |
| 6 | CR39 | 100 | αMS (0.5) /MSD (1.5) | PC1 (0.12) /PC2 (0.04) / PC3(0.12) | HALS (0.1) | ND (1) O (0.1) |

| | | | | | | |
|---|---|---|---|---|---|---|
| *1: Comparative Example, *2: Material | | | | | | |

**Table 8**

| Comp. Example No. | Max. absorption wavelength (λmas) | Color density | Fading rate (sec.) | Light resistance (%) | Close adhesion |
|---|---|---|---|---|---|
| 1 | 590 | 0.67 | 96 | 50 | 1 |
| 2 | 589 | 0.71 | 91 | 75 | 3 |
| 3 | 590 | 0.68 | 98 | 52 | 2 |
| 4 | 590 | 1.07 | 60 | 90 | 6 |
| 5 | 591 | 1 | 59 | 87 | 6 |
| 6 | 590 | 0.71 | 83 | 53 | 3 |

As will be obvious from Examples 1 to 19 described above, upon using the photochromic curable compositions that contains the (meth)acrylic polyfunctional monomer (Xp) and (meth)acrylic monofunctional monomers (Xm¹) and (Xm²) at specific ratios in accordance with the invention, there are obtained photochromic laminates having excellent photochromic properties and closely adhering property.

In Comparative Examples 1 to 3 and 6, on the other hand, the obtained photochromic laminates exhibit photochromic properties that are not sufficient. In Comparative Examples 2, 4, 5 and 6, the photochromic laminates have adhering property which is not sufficient.

### Description of Reference Numerals:

1: plastic lens material
2: mold
3: space (cavity) for forming
4: jig for forming space

## Claims

1. A photochromic curable composition including:
(A) a polymerizable monomer component that contains a (meth)acrylic polymerizable monomer (X), and
(B) a photochromic compound, the photochromic compound being contained in an amount of 0.01 to 20 parts by mass per 100 parts by mass of said (meth)acrylic polymerizable monomer (X), wherein:
said (meth)acrylic polymerizable monomer (X) is constituted by 80 to 97 parts by mass of a polyfunctional monomer (Xp) having not less than two (meth) acrylic groups in a molecule thereof, and 3 to 20 parts by mass of a monofunctional monomer (Xm) having one (meth) acrylic group in a molecule thereof, the total amount of the two components being 100 parts by mass;
said monofunctional monomer (Xm) is constituted by an epoxy group-containing monomer (Xm¹) represented by a following formula (1) and an isocyanate group-containing monomer (Xm²) represented by a following formula (2); and
said isocyanate group-containing monomer (Xm²) and said epoxy group-containing monomer (Xm¹) are contained at a mass ratio of Xm²/Xm¹ = 3 to 40;
Formula (1); epoxy group-containing monomer (Xm¹) 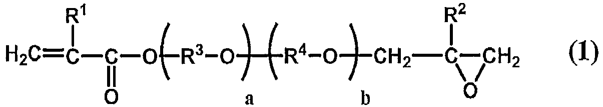 wherein,
R¹ and R² are hydrogen atoms or methyl groups,
R³ and R⁴ are alkylene groups having 1 to 4 carbon atoms or groups represented by a following formula (1a); 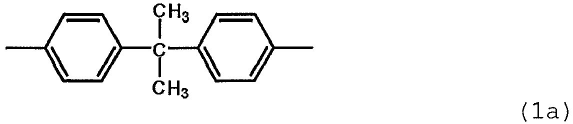 wherein,
"a" and "b" are, respectively, numbers of 0 to 20 on average,
Formula (2); isocyanate-containing monomer (Xm²) 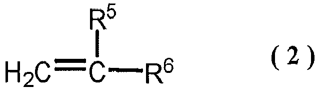 wherein,
R⁵ is a hydrogen atom or a methyl group,
R⁶ is an isocyanate-containing aliphatic group represented by the following formula (2a);
-CO-O-R⁷-NCO (2a)
wherein R⁷ is an alkylene group having 1 to 10 carbon atoms, or a group represented by the formula:
-CH₂CH₂-O-CH₂CH₂-,
or an isocyanate-containing aromatic group represented by a following formula (2b); 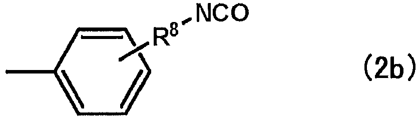 wherein R⁸ is an alkylene group having 1 to 10 carbon atoms.

2. The photochromic curable composition according to claim 1, wherein said polyfunctional monomer (Xp) is constituted by 50 to 99 mass% of a bifunctional monomer (Xp-1) having two (meth) acrylic groups, 1 to 50 mass% of a trifunctional monomer (Xp-2) having three (meth) acrylic groups, and 0 to 49 mass% of a highly polyfunctional monomer (Xp-3) having not less than four (meth) acrylic groups (provided the total amount of Xp-1 to Xp-3 is 100 mass%).

3. The photochromic curable composition according to claim 1, wherein a chromene compound having an indeno[2, 1-f]naphtho[2, 1-b] pyran skeleton is contained as said photochromic compound.

4. The photochromic curable composition according to claim 1, wherein, as the polymerizable monomer component (A), a non-(meth)acrylic polymerizble monomer (Y) having a polymerizable group other than the (meth)acrylic group is contained in an amount of 1 to 20 parts by mass per 100 parts by mass of the (meth)acrylic polymerizable monomer (X).

5. The photochromic curable composition according to claim 1, wherein a thermal polymerization initiator is, further, contained.

6. The photochromic curable composition according to claim 1, wherein said isocyanate group-containing monomer (Xm²) is preserved separately from other components.

7. A photochromic laminate having a photochromic layer of a photochromic cured body formed by curing the photochromic curable composition of claim 1.

8. The photochromic laminate according to claim 7, wherein said photochromic layer has a thickness of 100 to 1500 µm.

9. The photochromic laminate according to claim 8, wherein no peeling is observed between said photochromic layer and a lens material despite said photochromic laminate is dipped in the boiling water of 100°C for one hour and is, thereafter, dipped in the iced water of 0°C for 10 minutes repetitively for 4 times.

10. A process for producing a photochromic laminate, including steps of:
defining a space for forming by fixing a lens material to a mold;
injecting the photochromic curable composition of claim 1 into said space for forming; and
forming a photochromic layer on a surface of the lens material by curing said photochromic curable composition injected into the space for forming.

11. The process for production according to claim 10, wherein said photochromic curable composition is cured by thermal polymerizing.
